# EUROPÄISCHE PATENTSCHRIFT

(11) **EP 2 890 935 B1**
(45) Veröffentlichungstag und Bekanntmachung des Hinweises auf die Patenterteilung: **09.10.2019**
(21) Anmeldenummer: 13753142.2
(22) Anmeldetag: 16.08.2013
(51) Int. Cl.: F24C 15/16, A47B 88/40, A47B 88/487, F16C 29/04

(54) **AUSZUGSFÜHRUNG, HAUSHALTSGERÄT UND MÖBEL MIT EINER AUSZUGSFÜHRUNG UND NACHRÜSTSATZ**
PULL-OUT GUIDE, DOMESTIC APPLIANCE AND ITEM OF FURNITURE HAVING A PULL-OUT GUIDE, AND RETROFIT KIT
GLISSIÈRE DE TIROIR, APPAREIL MÉNAGER ET MEUBLE MUNIS D'UNE GLISSIÈRE DE TIROIR, ET KIT DE MONTAGE ULTÉRIEUR

(30) Priorität: 30.08.2012 DE 102012108068; 20.03.2013 DE 102013102846
(43) Veröffentlichungstag der Anmeldung: 08.07.2015
(73) Patentinhaber: Paul Hettich GmbH & Co. KG, 32278 Kirchlengern (DE)
(72) Erfinder: REHAGE, Daniel, 09137 Chemnitz (DE); HEMMINGER, Alexander, DE / 33790 Halle (DE); REIDT, Daniel, 32052 Herford (DE); KOLDEWEY, Christian, 33611 Bielefeld (DE)
(74) Vertreter: Kleine, Hubertus
(86) Internationale Anmeldenummer: PCT/EP2013/067189
(87) Internationale Veröffentlichungsnummer: WO 2014/032998

(56) Entgegenhaltungen:
- EP-A1- 0 553 836
- EP-A2- 2 186 438
- WO-A1-03/054450
- DE-A1- 10 162 925
- DE-U1-202010 008 825

## Beschreibung

Die Erfindung betrifft eine Auszugsführung für ein Möbel oder ein Haushaltsgerät mit einem ortsfesten Führungselement und mindestens einer Laufschiene, wobei zwischen dem Führungselement und der Laufschiene ein Wälzkörperkäfig mit einer Mehrzahl von Wälzkörpern angeordnet ist. Die Erfindung betrifft weiterhin ein Möbel oder Haushaltsgerät, das eine derartige Auszugsführung aufweist, und einen Nachrüstsatz für ein Möbel oder Haushaltsgerät, um dieses Möbel oder Haushaltsgerät nachträglich mit einer derartigen Auszugsführung auszustatten.

Auszugsführungen für Möbel oder Haushaltsgeräte weisen üblicherweise eine Führungsschiene als ortsfestes Führungselement auf, an oder in der eine Laufschiene gelagert durch Wälzkörper, die in einem Wälzkörperkäfig angeordnet sind, verfahrbar geführt ist. Als Führungs- bzw. Laufschienen haben sich dabei Profile aus profiliertem Blech etabliert. Es können dabei mehrere, wiederum gegeneinander geführte Laufschienen vorgesehen sein, um einen größeren Verschiebeweg der Auszugsführung zu erreichen (sogenannte Vollauszüge). Bekannt sind beispielsweise dreiteilige Auszugsführungen mit zwei Laufschienen, von denen die unmittelbar auf der ortsfesten Führungsschiene geführte Laufschiene auch als Mittelschiene bezeichnet wird.

Derartige Auszugsführungen kommen in einer temperaturbeständigen Ausführung auch in Haushaltsgeräten, beispielsweise Backöfen, zum Einsatz, um Gargutträger bequem aus dem Garraum des Gargerätes herausziehen zu können. Eine für diesen Zweck geeignete Auszugsführung ist beispielsweise aus der Druckschrift DE 10 2004 061 889 A1 bekannt. Die ortsfeste Führungsschiene ist dabei mit Haltewinkeln versehen, die an inneren Seitenwänden des Garraums eines Gargeräts, beispielsweise über Schrauben, befestigt werden können. Die Montage der Auszugsführung ist jedoch aufwändig und verlangt spezielle Befestigungsmöglichkeiten innerhalb des Garraums.

Üblicherweise werden in Garräumen, beispielsweise von Backöfen, an den inneren Seitenwänden Seitengitter festgelegt, die aus stangenartigem Drahtmaterial geschweißt sind und die Einschubmöglichkeiten für Gargutträger bereitstellen.

Um neben der Befestigung für derartige Seitengitter nicht zusätzliche Montagemöglichkeiten für Auszugsführungen bereitstellen zu müssen, ist es bekannt, Auszugsführungen an den Seitengittern zu befestigen. Die Druckschrift DE 20 2008 010 188 U1 offenbart eine Auszugsführung, bei der eine ortsfeste Führungsschiene mit Schnellbefestigungselementen versehen ist, die an Abschnitten des Seitengitters beispielsweise klemmend oder rastend festgelegt werden kann. Aus der Druckschrift WO 2011/147805 A1 ist eine ähnliche Auszugsführung bekannt, bei der eine ortsfeste Führungsschiene als ein Hohlprofil ausgebildet ist, das zumindest abschnittsweise über eine horizontale Stange des Seitengitters aufgeschoben wird. Auf diese Weise stabilisiert das Seitengitter die Führungsschiene, wodurch diese aus besonders dünnwandigem Material hergestellt sein kann. Die Führungsschiene kann klemmend oder rastend an der Stange des Seitengitters festgelegt werden und ggf. durch zusätzliche Halteelemente an der Stange fixiert werden. Der verringerte Materialeinsatz bei der Führungsschiene ist im Hinblick auf die Herstellungskosten vorteilhaft. Auch aus energetischer Sicht ist ein geringerer Materialeinsatz bei der Führungsschiene erstrebenswert, da der Energieverbrauch des Gargeräts verringert wird, wenn weniger Masse auf die Betriebstemperatur aufgeheizt werden muss.

Aus der Druckschrift WO 03/054450 ist ein Auszugssystem eines Haushaltsgeräts, insbesondere eines Gargeräts, bekannt.

Weiterhin sind sogenannte Drahtwälzlager bekannt, beispielsweise aus der Druckschrift DE 34 36 406 A1. Diese dienen der Führung eines Schlittens entlang einer beliebig gekrümmten Bahn. Die Bahn wird dabei durch entsprechend geformtes Drahtbett vorgegeben, in das Drähte eingesetzt sind, die als Laufdrähte für im Schlitten angeordnete Wälzkörper dienen. Eine solche Führung ist zum einen nicht als Auszugsführung geeignet und ist zum anderen aufgrund des Drahtbetts sehr materialaufwändig.

Es ist Aufgabe der vorliegenden Erfindung, eine Auszugsführung mit geringem Materialeinsatz bereitzustellen, die in Möbeln oder Haushaltsgeräten, insbesondere Gargeräten, eingesetzt werden kann. Die Auszugsführung soll auf einfache Weise nachrüstbar sein, insbesondere bei Gargeräten, die die üblichen Seitengitter aufweisen. Es ist eine weitere Aufgabe der vorliegenden Erfindung, einen Nachrüstsatz bereitzustellen, mit dem ein Möbel oder Haushaltsgerät auf einfache Weise und möglichst werkzeuglos von einem Benutzer um eine Auszugsführung ergänzt werden kann.

Diese Aufgabe wird gelöst durch eine Auszugsführung mit den Merkmalen des unabhängigen Anspruchs. Vorteilhafte Ausgestaltungen und Weiterbildungen sind in den abhängigen Ansprüchen angegeben.

Eine erfinderische Auszugsführung der eingangs genannten Art zeichnet sich dadurch aus, dass das Führungselement von mindestens einem Draht gebildet ist. Auf diese Weise wird eine Auszugsführung mit einem kostengünstigen und leicht herstellbaren Führungselement realisiert. Eine derartige Auszugsführung kann zudem leicht an einem Haushaltsgerät oder einem Möbel nachgerüstet werden. Dieses gilt insbesondere für Gargeräte, da diese üblicherweise bereits standardmäßig einen als Führungselement geeigneten Draht als Teil eines Seitengitters bereitstellen.

Haushaltsgeräte im Sinne dieser Schrift sind beispielsweise Backöfen, Herde, Kühl- und/oder Gefriergeräte, Geschirrspülmaschinen, Dampfgargeräte, Mikrowellengeräte, Waschmaschinen, Wäschetrockner, Speisewärmer oder Grillgeräte.

Der Begriff Möbel umfasst beispielsweise auch Einrichtungen für Laboratorien, Werkstätten, Produktionsstätten, Läden, Fahrzeuge, Wohnmobile, Wohnwagen, Schiffe oder Yachten.

Das als Draht ausgebildete Führungselement kann jede Geometrie inne haben die durch Prozesse in nahezu endloser Längserstreckung erzeugt werden kann. Der Draht kann auch hohl im Sinne einer Röhre bzw. eines Rohres ausgeführt sein. Die äußere Gestalt kann durch ein Vieleck beschrieben sein. Alle ovalen, runden Formen sollen ebenfalls erfasst sein.

Als mit dem erfindungsgemäßen Führungssystem verschiebbar gelagerten Auszugselemente seien exemplarisch Schubkästen, Behälter für Kühlgut, Tablarauszüge, Gargutträger wie Backbleche, Gitter oder Fettpfannen genannt.

Erfindungsgemäß weist der Draht an mindestens einem Ende einen abgebogenen Endabschnitt auf. Der abgebogene Endabschnitt stellt ein geeignetes Befestigungsmittel dar, mit dem der Draht und damit die Auszugsführung an dem Möbel oder Gerät festgelegt werden kann.

In einer weiteren vorteilhaften Ausgestaltung der Auszugsführung weist der Draht zumindest in einem Abschnitt, in dem er in einem Kontakt mit den Wälzkörpern ist, ein durchgängig gleiches Profil auf, insbesondere mit einem runden, elliptischen, viereckigen, insbesondere quadratischen oder rautenförmigen, oder ovalen Querschnitt. Das durchgängig gleiche Profil ist vorteilhaft zur Ausbildung von Laufbahnen für die Wälzkörper. Drähte sind als Halbzeug beispielsweise in den genannten Querschnitten erhältlich. Sie können so ohne weitere umformende Verfahrensschritte als Führungselemente eingesetzt werden.

In einer weiteren vorteilhaften Ausgestaltung der Auszugsführung ist der Draht frei tragend. Dieses minimiert den Materialeinsatz weiter.

In einer weiteren vorteilhaften Ausgestaltung der Auszugsführung weist die Laufschiene ein c-förmiges Profil mit einer schlitzförmigen Öffnung auf. Bevorzugt führen die abgebogenen Endabschnitte des Drahts durch die schlitzförmige Öffnung der Laufschiene, wodurch eine Verdrehung der Laufschiene um den Draht eingeschränkt ist. Auf diese Weise kann die Auszugsführung selbst bei einem runden Querschnitt des Drahts ein Drehmoment aufnehmen, ohne dass es zu einer Verdrehung um die Achse der Auszugsrichtung kommt.

Erfindungsgemäß weist die Laufschiene Öffnungen oder nach außen ausgeprägte Kalotten auf, in die zumindest einige der Wälzkörper eingedrückt werden können, um die abgebogenen Endabschnitte des Drahts oder der Draht zwischen mindestens zwei gegenüberliegenden Wälzkörpern hindurchführen zu können. Bevorzugt sind dabei in dem Wälzkörperkäfig Wälzkörpertaschen vorgesehen, in denen die Wälzkörper in zwei unterschiedlichen Positionen gehalten sind. So werden Parkpositionen für die Wälzkörper geschaffen, in die die Wälzkörper gebracht werden können, um die Laufschiene mit eingesetztem Wälzkörperkäfig zur Montage auf den Draht aufschieben zu können.

In einer weiteren vorteilhaften Ausgestaltung der Auszugsführung sind im Wälzkörperkäfig in einem vorderen oberen Bereich und/oder in einem hinteren unteren Bereich von den Wälzkörpern beabstandete Zusatzwälzkörper vorgesehen, die mit ihrer Lauffläche am Draht anliegen und die über den mindestens einen abgebogenen Endabschnitt des Drahts hinausbewegbar sind. Die Zusatzwälzkörper können von einer Last, beispielsweise einem Gargutträger auf die Laufschienen aufgebrachte Gewichtskräfte aufnehmen und minimieren so ein Abkippen des vorderen Endes der Laufschiene. Zugleich schränken sie den Auszugsweg nicht ein, da sie anders als die Wälzkörper über den abgebogenen Endabschnitt des Drahts hinausbewegt werden können.

Wälzkörper sowie Zusatzwälzkörper können durch verschiedene geometrische Formen gebildet werden, beispielsweise können sie zylindrische Gestalt, bauchige Gestalt oder kugelförmige Gestalt aufweisen. Ausgeführt werden können sie auch als Rollen mit einer Lagerung. Geneigte Achsen zur Lagerung sind ebenfalls denkbar.

In einer weiteren vorteilhaften Ausgestaltung der Auszugsführung ist ein an dem Draht festlegbarer Reiter vorgesehen, der als Anschlag für den Wälzkörperkäfig dient. Bevorzugt ist der Reiter als Eckanschlag ausgebildet, der an dem Übergang zum dem abgebogenen Endabschnitt festlegbar ist. So kann ein Auflaufen der Wälzkörper auf den abgebogenen Endabschnitt, das mit einer Selbsthemmung der Auszugsführung durch klemmende Wälzkörper verbunden sein kann, verhindert werden.

In einer weiteren vorteilhaften Ausgestaltung der Auszugsführung ist diese als Vollauszug oder Überauszug ausgebildet und weist eine weitere Laufschiene auf, die über weitere Wälzkörper verfahrbar an der Laufschiene gelagert ist. So wird ein größerer Verfahrweg erzielt.

In einer weiteren vorteilhaften Ausgestaltung der Auszugsführung können vorteilhaft zwei parallele und beabstandete Drähte als Führungselement dienen, wodurch eine höhere Belastbarkeit der Auszugsführung erreicht werden kann. Beispielweise ist der Wälzkörperkäfig dann zweiteilig ausgebildet mit einem äußeren Wälzkörperkäfig und einem inneren Wälzkörperkäfig, wobei der innere Wälzkörperkäfig innere Wälzkörper trägt, die zwischen den zwei parallelen und beabstandeten Drähte laufen. Durch den inneren Wälzkörperkäfig wird ein Zusammendrücken der beiden parallelen benachbarten Drähte verhindert, wodurch sich die Belastbarkeit der Auszugsführung weiter erhöht.

Wenn zwei parallel liegende Drähte als Führungselement Verwendung finden, ist insbesondere eine einteilige Ausführung des Kugelkäfigs denkbar. Die Drähte liegen so orientiert zueinander, dass sie nahezu im Bereich ihrer Längserstreckung in Kontakt treten oder in Kontakt treten.

Für die beiden Wälzkörpersegmente sind neben Verrasten auch weitere Fügeverfahren denkbar, sie können stoff-, form- oder kraftschlüssig aneinander festgelegt werden.

In einer weiteren vorteilhaften Ausgestaltung der Auszugsführung ist der Draht Teil eines Seitengitters eines Gargeräts. Dadurch kann in einem Gargerät eine Auszugsführung realisiert werden, bei der ein sowieso vorhandener Draht als Führungselement verwendet wird. Diese Lösung ist besonders kostengünstig und materialsparend.

In einer weiteren vorteilhaften Ausgestaltung der Auszugsführung ist der Draht mit seinen abgebogenen Endabschnitten so ausgebildet, dass er in Bohrungen, die in einen Möbelkorpus eingebracht sind, festlegbar ist. Bevorzugt weisen die abgebogenen Endabschnitte dabei einen Abstand voneinander auf, der einem Abstand von Lochreihen in dem Möbelkorpus entspricht. Unter Verwendung eines passend ausgebildeten u-förmig gebogenen Drahts wird so eine Auszugsführung geschaffen, die kostengünstig und materialsparend herstellbar ist und die auf einfachste Weise in solchen Möbeln eingesetzt werden kann, die mit Lochreihen, z.B. zur Aufnahme von Regalbrettern, Schubkästen usw., versehen sind.

Ein erfindungsgemäßes Haushaltsgerät, ein erfindungsgemäßes Möbel und ein erfindungsgemäßer Nachrüstsatz zeichnen sich durch eine solche Auszugsführung aus. Es ergeben sich die zuvor genannten Vorteile.

Die Erfindung wird nachfolgend anhand von Ausführungsbeispielen mithilfe von mehreren Zeichnungen näher erläutert.

Es zeigen:
- Fig. 1a u. b: ein erstes Ausführungsbeispiel einer Auszugsführung eingesetzt in einem Backofen;
- Fig. 2a, b, c u. 3a, b, c: verschiedene Detailzeichnungen der Auszugsführung des ersten Ausführungsbeispiels;
- Fig. 4: eine alternative Ausgestaltung der Auszugsführung des ersten Ausführungsbeispiels in einer Schnittzeichnung;
- Fig. 5a, b: eine weitere alternative Ausgestaltung der Auszugsführung des ersten Ausführungsbeispiels in verschiedenen Darstellungen;
- Fig. 6a, b, c u. 7a, b, c: ein zweites nicht erfindungsgemäßes Ausführungsbeispiel einer Auszugsführung in verschiedenen Darstellungen;
- Fig. 8a, b: eine alternative Ausgestaltung der Auszugsführung des ersten oder zweiten Ausführungsbeispiels in verschiedenen Darstellungen;
- Fig. 9a, b: ein drittes nicht erfindungsgemäßes Ausführungsbeispiel einer Auszugsführung in verschiedenen Darstellungen;
- Fig. 10a, b u. 11a, b: ein viertes Ausführungsbeispiel einer Auszugszugsführung eingesetzt in einem Backofen;
- Fig. 12: eine schematische Darstellung eines Wälzkörperkäfigs der Auszugsführung der Fig. 10 und 11, aufgesetzt auf ein Seitengitter eines Backofens;
- Fig. 13a, b, c: verschiedene Ansichten des Wälzkörperkäfigs aus Fig. 12 und
- Fig. 14a, b, c: verschiedene Ansichten einer alternativen Ausgestaltung eines Wälzkörperkäfigs des vierten Ausführungsbeispiels einer Auszugsführung
- Fig. 15a, b: ein fünftes Ausführungsbeispiel einer Auszugsführung eingesetzt in einem Backofen;
- Fig. 16: eine detaillierte Schnittzeichnung der Auszugsführung des fünften Ausführungsbeispiels;
- Fig. 17a, b: ein sechstes Ausführungsbeispiel einer Auszugsführung eingesetzt in einem Backofen;
- Fig. 18: eine detailliertes Schnittdarstellung der Auszugsführung des sechsten Ausführungsbeispiels;
- Fig. 19 u. 20: jeweils eine Schnittdarstellung eines siebten und eines achten Ausführungsbeispiels einer Auszugsführung;
- Fig. 21a, b, c: ein neuntes Ausführungsbeispiel einer Auszugsführung eingesetzt in ein Backofen;
- Fig. 22: ein Wälzkörperkäfig des neunten Ausführungsbeispiels in einer perspektivischen Detaildarstellung;
- Fig. 23a bis: d ein Außenkäfig eines Wälzkörperkäfigs des neunten Ausführungsbeispiels in verschiedenen Ansichten;
- Fig. 24a bis: d ein Innenkäfig eines Wälzkörperkäfigs des neunten Ausführungsbeispiels in verschiedenen Ansichten; und
- Fig. 25a, b, c: ein zehntes Ausführungsbeispiel einer Auszugsführung eingesetzt in einem Möbelkorpus.

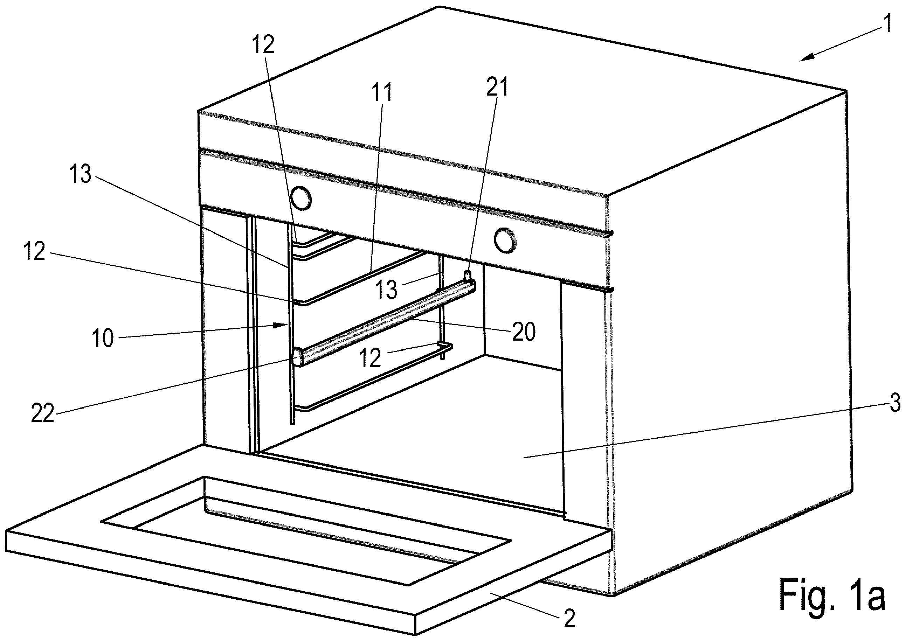

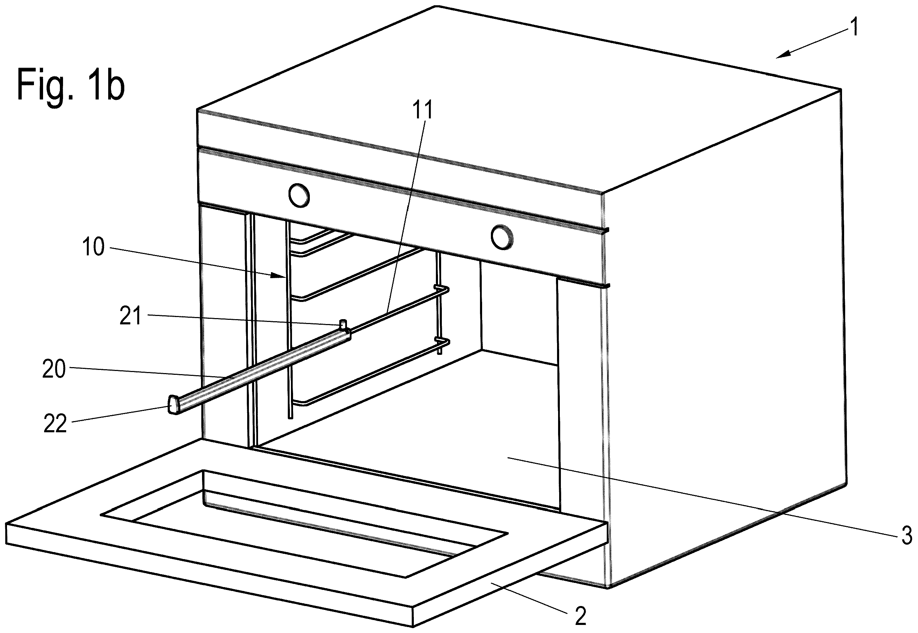

Fig. 1a und 1b zeigen einen Backofen 1 mit geöffneter Tür 2 in einer perspektivischen schematischen Darstellung, die Einblick in einen Garraum 3 des Backofens 1 gewährt. Der Backofen 1 ist als Beispiel eines Haushaltsgerätes gewählt. Die nachfolgend beschriebene erfindungsgemäße Auszugsführung kann ebenso in einem anderen Haushaltsgerätes, beispielsweise einem Dampfgarer oder einem Mikrowellengerät, eingesetzt werden.

Im Garraum 3 ist an Seitenwänden des Backofens 1 ein Seitengitter 10 angebracht. Das Seitengitter 10 weist zwei vertikal angeordnete Pfosten 13 auf, die miteinander über horizontal ausgerichtete Drähte 11 miteinander verbunden sind. Erfindungsgemäß werden die Drähte 11 als Führungselemente für die Auszugsführung eingesetzt. Die Drähte 11 weisen an ihren Enden abgewinkelte Endabschnitte 12 auf, die üblicherweise über eine Schweißverbindung mit den Pfosten 13 verbunden sind, auf. Als Material des Seitengitters 10 wird Draht in einer Stärke zwischen typischerweise 4 mm bis 8 mm eingesetzt. In dieser Ausgestaltung sind die Seitengitter 10 an sich bekannt, wobei Gargutträger, beispielsweise Backbleche, unmittelbar auf die horizontal verlaufenden Drähte 11 aufgelegt werden. Wie im oberen Bereich erkenntlich, können dabei die horizontal verlaufenden Drähte 11 paarweise eng benachbart angeordnet sein, wobei der Gargutträger zwischen die beiden eng benachbarten Drähte 11 geschoben wird, um ein Abkippen beim Herausziehen zu verhindern.

In dem in Fig. 1 dargestellten ersten Ausführungsbeispiel ist auf einen der horizontal verlaufenden Drähte 11 eine Laufschiene 20 aufgesetzt, die an ihrem hinteren Ende einen nach oben herausstehenden Anlagebolzen 21 aufweist und die an ihrem vorderen Ende mit einem Stopfen 22 verschlossen ist, der eine ebenfalls nach oben weisende Anlagelasche bereitstellt. Auf die Führungsschiene 20 kann nunmehr ein Gargutträger zwischen den Anlagebolzen 21 und die Lasche des Stopfens 22 aufgelegt werden, sodass der Gargutträger mit geringer Reibung und ohne die Gefahr des Abkippens herausgezogen werden kann. Anlagebolzen und Stopfen können auch aus der Laufschiene ausgestellt oder geprägt sein.

In Fig. 1a ist die Laufschiene 20 der Auszugsführung in einem eingeschobenen Zustand gezeigt, wohingegen Fig. 1b die Laufschiene 20 in einem herausgezogenen Zustand wiedergibt. Beispielhaft ist nur einer der Drähte 11 des Seitengitters 10 mit einer Laufschiene 20 versehen und so als Führungselement eingesetzt. Es versteht sich jedoch, dass weitere oder alle der horizontalen Drähte 11 des Führungsgitters 10 mit Laufschienen 20 versehen werden können. Ebenso wurde aus Darstellungsgründen darauf verzichtet, die ausgefahrene Laufschiene auf der gegenüberliegenden Seitenwand abzubilden.

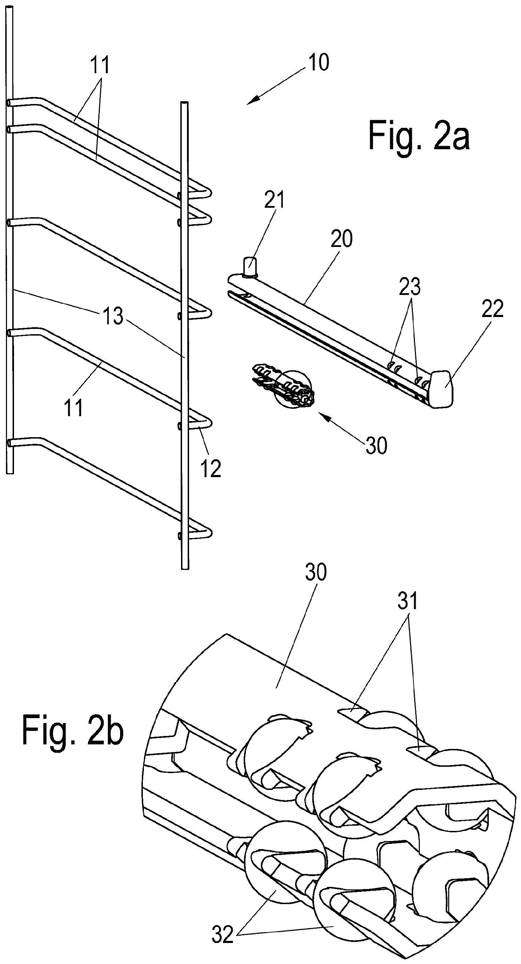

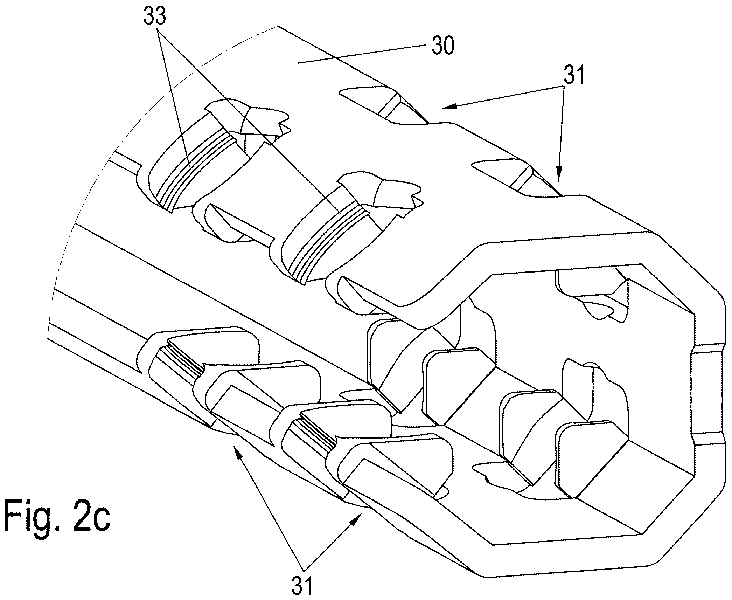

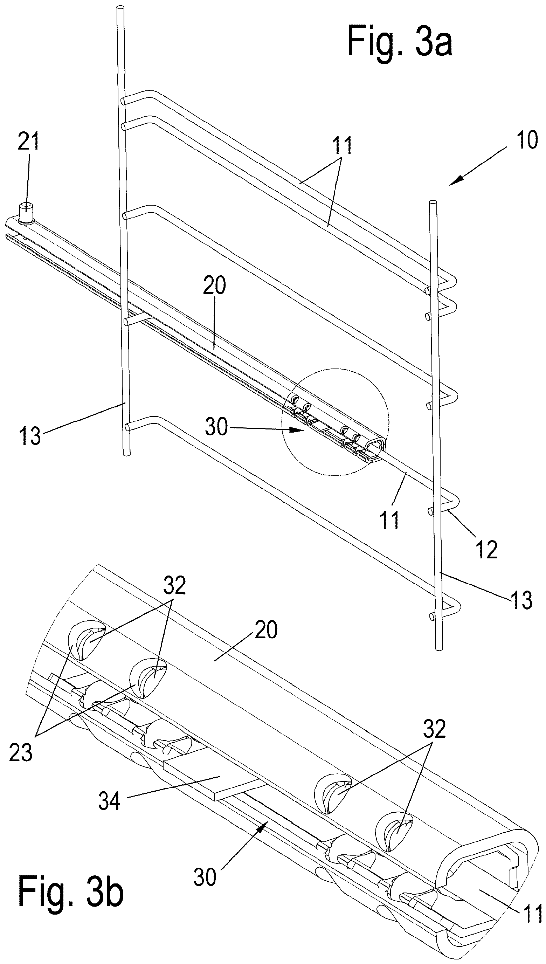

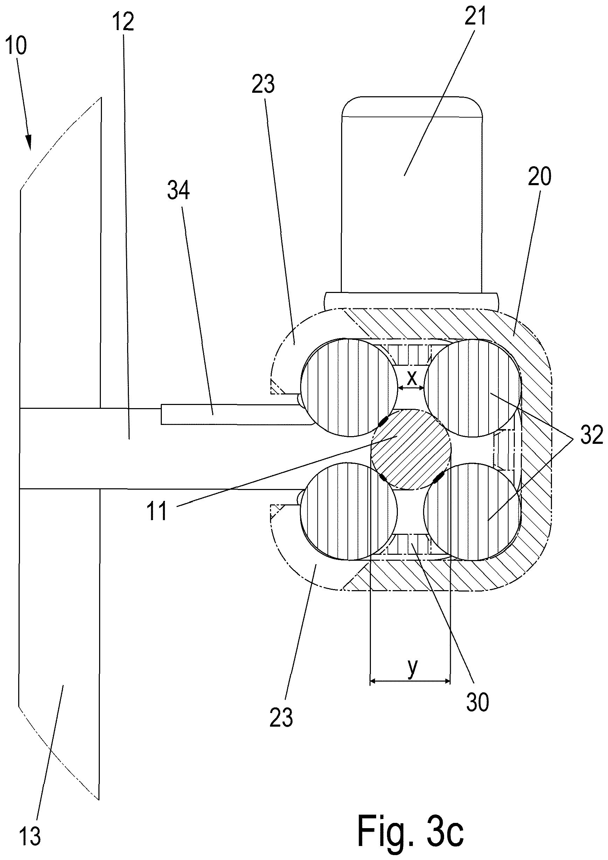

In den Fig. 2 und 3 sind Details der Auszugsführung des ersten Ausführungsbeispiels gemäß Fig. 1 in verschiedenen Darstellungen wiedergegeben. In allen Figuren dieser Anmeldung und bei allen Ausführungsbeispielen kennzeichnen gleiche Bezugszeichen gleiche oder gleichwirkende Elemente.

Fig. 2a zeigt die Auszugsführung des ersten Ausführungsbeispiels in Art einer perspektivischen Explosionsdarstellung. Das Seitengitter 10 ist hier ohne den Backofen 1 dargestellt, um eine perspektivische Darstellung von der Rückseite des Seitengitters 10, also von der der Innenwand des Garraums 3 zugewandte Seiten aus zu ermöglichen. Aus der Darstellung ist ersichtlich, dass die Laufschiene 20 als eine c-förmig profilierte Hohlschiene ausgebildet ist, hergestellt beispielsweise aus profiliertem Blechmaterial.

Zwischen dem horizontalen Draht 11 des Seitengitters 10, der als Führungselement eingesetzt wird, und der Laufschiene 20 ist ein Wälzkörperkäfig 30 angeordnet, der in Fig. 2b in einer Vergrößerung dargestellt ist. Der Wälzkörperkäfig 30, der beispielsweise aus einem temperaturbeständigen Kunststoff oder Metall einstückig gefertigt ist, weist eine Mehrzahl von Wälzkörpertaschen 31 auf, in die Wälzkörper 32, hier Kugeln, beispielsweise Stahlkugeln, eingesetzt sind. Vorliegend sind 16 Wälzkörper 32 vorgesehen, die in vier sich entlang der Verschieberichtung erstreckenden Reihen sowie in vier senkrecht zur Verschieberichtung ausgerichteten Ebenen angeordnet sind. Die 16 Wälzkörper 32 gruppieren sich in jeweils zwei eng benachbarten Ebenen an jedem Ende des Wälzkörperkäfigs 30. Es versteht sich, dass eine andere Anzahl von Wälzkörpern 32 und/oder eine andere Anordnung der Wälzkörper 32 zueinander möglich ist. Der Wälzkörperkäfig 30 ist in ähnlicher Weise wie die Laufschiene 20 als ein c-förmiges Profil ausgebildet.

In Fig. 3a ist in gleicher Weise wie in Fig. 2a die Auszugsführung in einem zusammengesetzten Zustand gezeigt. Zum Aufsetzen der Laufschiene 20 auf das Führungselement 11 wird zunächst der Wälzkörperkäfig 30 in die Laufschiene 20 eingesetzt. Dieses geschieht bei abgenommenem Stopfen 22, der daraufhin, beispielsweise rastend, in die Führungsschiene 20 eingesetzt wird. Im Bereich des Anlagebolzens 21 weist die Führungsschiene 20 Einprägungen auf, die ein Herausrutschen des Wälzkörperkäfigs 30 verhindern.

Fig. 3c zeigt die Auszugsführung in einem zusammengesetzten Zustand in einer Schnittdarstellung. In dieser Schnittdarstellung ist erkennbar, dass benachbarte Wälzkörper 32, die zum einen am Führungselement und zum anderen an der Laufschiene 20 anliegen, einen freien Abstand X zwischen ihren Oberflächen voneinander aufweisen, der bedingt durch die Geometrie kleiner ist, als der Durchmesser Y des Drahtes 11. Daher kann die Laufschiene 20 mit eingesetzten Wälzkörperkäfig 30 nicht ohne weiteres auf den Draht 11 aufgeschoben werden - der Platz zwischen den beiden Wälzkörpern 32 reicht nicht aus, um den Wälzkörperkäfig über die abgebogenen Endabschnitte 12 des Drahtes 11 zu schieben.

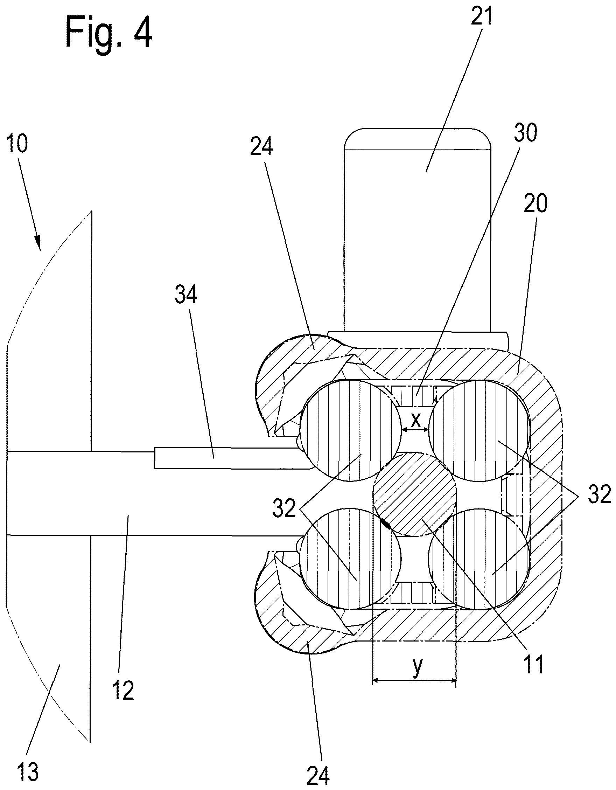

Um ein Aufsetzen der Laufschiene 20, in die der Wälzkörperkäfig 30 eingesetzt ist, dennoch zu ermöglichen, weist die Laufschiene 20 in diesem Ausführungsbeispiel Öffnungen 23 auf, die im Bereich des vorderen Endes der Laufschiene 20 angeordnet sind und die so positioniert sind, dass die der Innenwand des Backofens 1 zugewandten acht Wälzkörper 32 in diese Öffnungen 23 zumindest teilweise hinein bewegbar sind. Dieser Freiheitsgrad der Wälzkörper 32 ermöglicht, dass bei einer Position des Wälzkörperkäfigs 30 im Bereich der Öffnungen 23 die Wälzkörper 32 paarweise soweit voneinander entfernt werden können, dass die Laufschiene 20 mit dem Wälzkörperkäfig 30 über den vorderen abgebogenen Endabschnitt 12 des Drahtes 11 geführt werden kann. Die Öffnungen 23 können dabei so ausgebildet sein, dass die Wälzkörper 32 nicht vollständig durch sie hindurch treten können. Dieses kann durch einen entsprechenden Durchmesser der Öffnungen 23 im Verhältnis zum Durchmesser der Wälzkörper 32 erreicht werden. Auch ist es möglich, die Öffnungen 23 konisch mit sich nach innen hin vergrößerndem Durchmesser auszubilden. In einer weiteren alternativen Ausgestaltung sind anstelle von Öffnungen 23 Kalotten 24 in der Laufschiene 20 ausgebildet, beispielsweise ausgeprägt, wie dieses in Fig. 4 dargestellt ist. Auch ein seitliches Aufsetzen der Laufschiene 20 auf den Draht 11 ist möglich.

In Fig. 2c ist der Wälzkörperkäfig 30 analog zur Fig. 2b in einer Vergrößerung dargestellt, wobei in der Fig. 2c die Wälzkörper 32 nicht eingesetzt sind. Die Fig. 2c zeigt, dass die Wälzkörpertaschen 31, die auf der der Innenwand des Backofens 1 zugewandten Seite liegen, in denen also solche Wälzkörper 32 eingesetzt sind, die in die Öffnungen 23 bzw. die Kalotten 24 der Laufschiene 20 hinein bewegt werden, mit einem Steg 33 versehen sind, der die Wälzkörpertaschen 31 in zwei Bereiche unterteilt, in denen die Wälzkörper 32 positioniert sein können und in denen sie gehalten werden. Zum Aufsetzen der Laufschiene 20 mit dem eingesetzten Wälzkörperkäfig 30 sind die entsprechenden Wälzkörper 32 jeweils in der äußeren Position in den Wälzkörpertaschen 31 gehalten. Wird anschließend der Wälzkörperkäfig 30 gegenüber der Laufschiene 20 verfahren, z.B. bei Bewegung der Laufschiene 20 gegenüber dem Seitengitter 10, werden die entsprechenden Wälzkörper 32 über den Steg 33 in die innere, normale Position innerhalb der Wälzkörpertaschen 31 gedrückt.

Am Wälzkörper 32 ist eine Grifflasche 34 angeordnet, die in Richtung der Innenwand des Backofens 1 in aus der Laufschiene 20 herausragt. Über diese Grifflasche kann nachdem Aufsetzen der Laufschiene 20 der Wälzkörperkäfig 30 zum hinteren Ende, also in Richtung des Anlagebolzens 21 verschoben werden. Im normalen Betrieb sollte sich der Wälzkörperkäfig 30 zwischen der Mitte und dem hinteren Ende des Führungsdrahtes 11 befinden, wenn die Laufschiene 20 in dem Garraum 3 eingefahren ist. Beim Herausziehen der Laufschiene 20 verfährt der Wälzkörperkäfig 30 dann entsprechend mit der Laufschiene 20 nach vorne, wobei er jedoch nur den halben Laufweg der Laufschiene 20 zurücklegt. Bei der Benutzung der Laufschiene 20 gelangt in der Folge der Wälzkörperkäfig 30 normalerweise nicht mehr in dem Bereich der Öffnungen 23 bzw. Kalotten 24. Sollte dieses, beispielsweise aufgrund einer erhöhten Reibung zwischen den Wälzkörpern 32 und dem Draht 11 z.B. bedingt durch eine Verschmutzung des Drahtes 11, doch eintreten, wird bei einem nächsten Auszugsvorgang der Laufschiene 20 die korrekte Positionierung des Wälzkörperkäfigs 30 relativ zur Laufschiene 20 wiederhergestellt, da der Wälzkörperkäfig 30 sich nicht weiter als bis zu vorderen Ende des Drahtes 11 bewegen kann und die Laufschiene 20 danach reibend über die Wälzkörper 32 in die ausgezogene Position gebracht wird. Beim nächsten Einschiebevorgang hat sich wieder die korrekte Positionierung von Wälzkörperkäfig 30 und Laufschiene 20 zueinander eingestellt.

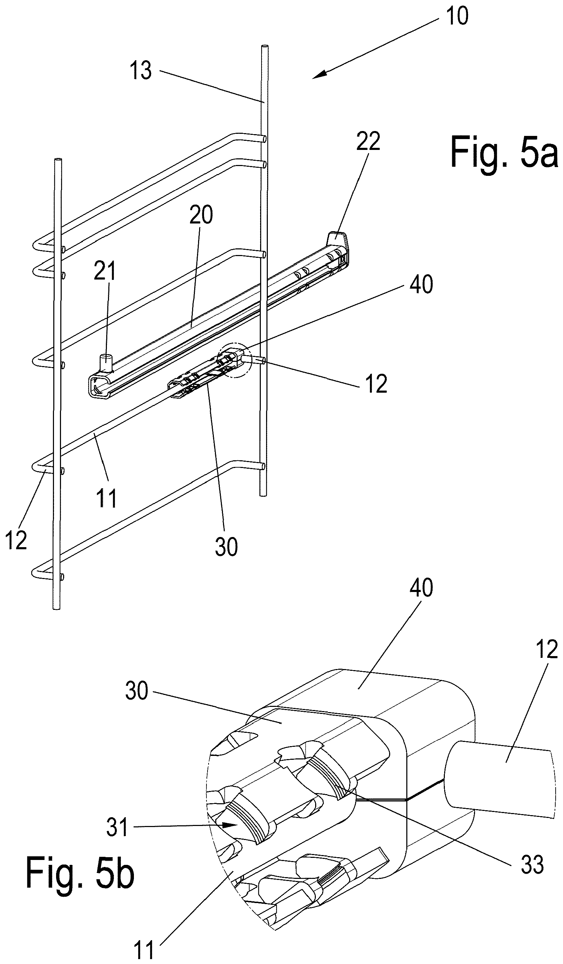

In dem dargestellten Ausführungsbeispiel ist ein Bewegen des Wälzkörperkäfig 30 über das vordere Ende des Drahtes 11 hinaus dadurch begrenzt, dass die vorderen und der Innenwand des Garraums 3 zugewandten Wälzkörper 32 gegen die abgewinkelten Endabschnitte 12 des Drahtes 11 laufen. Es kann dabei, je nach Reibungseigenschaften der Wälzkörper 32 auf dem Draht 11 und der Laufschiene 20, unter Umständen zu einer Selbsthemmung der Bewegung der Laufschiene 20 kommen. Um dieses zu verhindern, kann ein Reiter am Draht 11 festgelegt sein, an den der Wälzkörperkäfig 30 anschlägt. Ein solcher Reiter ist in der Fig. 5a in der Übersicht und in der Fig. 5b im Detail dargestellt. Der Reiter ist als Eckanschlag 40 ausgeführt und kann beispielsweise aus zwei miteinander verrastenden Hälften gebildet sein, beispielsweise aus temperaturbeständigem Kunststoff oder aus Metall gefertigt. Die beiden Hälften werden um den Draht 11 bzw. der abgebogene Endabschnitt 12 im Bereich der Abbiegung gelegt und miteinander verrastet. Der Eckanschlag 40 kann aus einem Gleitwerkstoff gefertigt werden und dient dann zusätzlich zur senkrechten Positionierung der Laufschiene 20. Der Eckanschlag 20 dient dann als Verdrehsicherung für die Laufschiene 20.

Bei den Ausführungsbeispielen ohne Eckanschlag 40 kommt das Profil der Laufschiene 20 beim Kippen/Rotieren um die Längsachse an mindestens einem abgebogenen Endabschnitt 12 zur Anlage. Hier dient der abgebogene Endabschnitt 20 als Kippschutz bzw. Verdrehsicherung für die Laufschiene 20. Auch ist es denkbar die Anlagebolzen 21 der linken und rechten Auszugsführung über eine Synchronisationsstange zu verbinden und so eine Verdrehsicherung für beide Auszugsführungen zu schaffen.

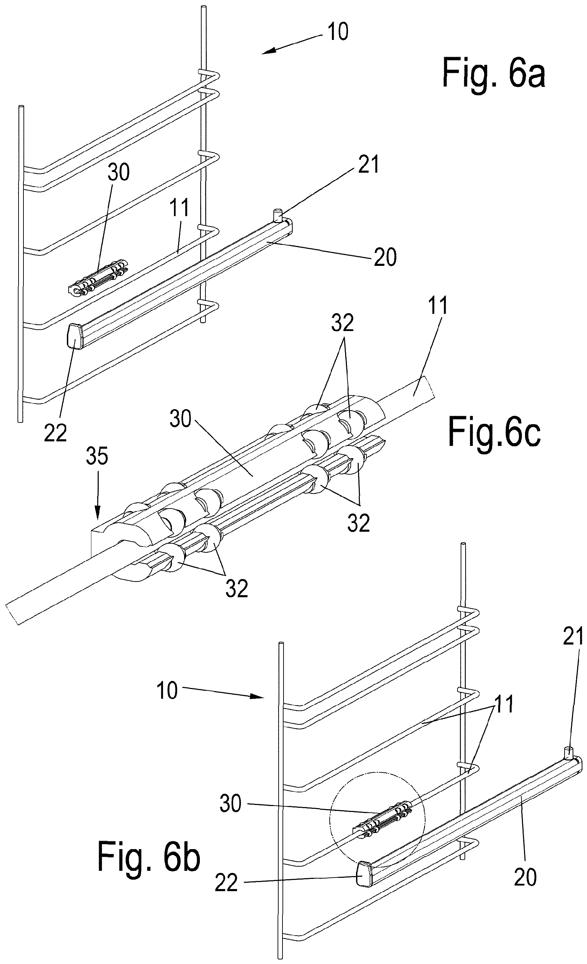

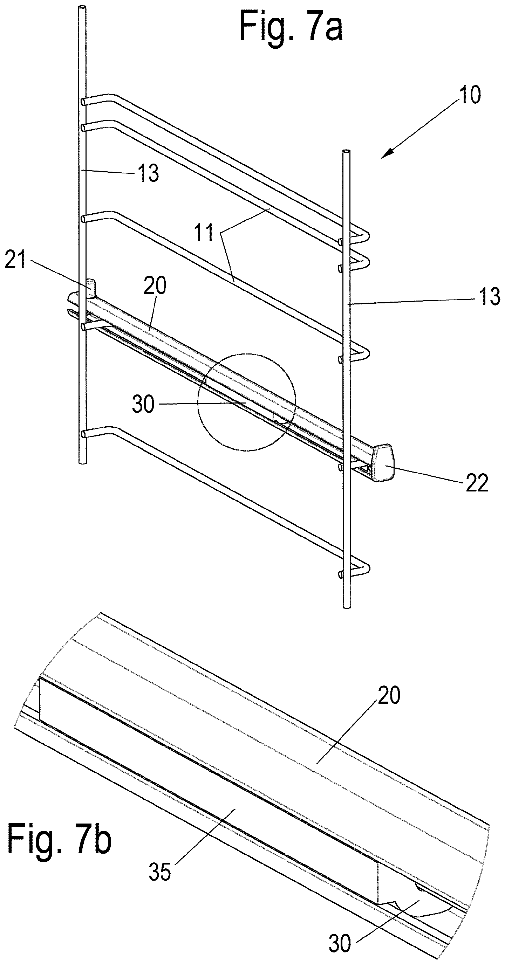

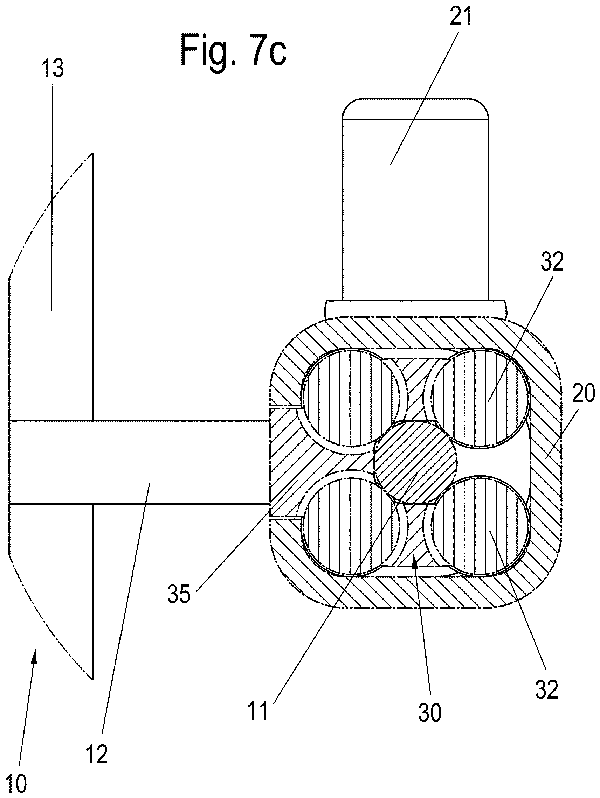

In den Fig. 6 und 7 ist ein zweites Ausführungsbeispiel einer Auszugsführung in unterschiedlichen Darstellungen wiedergegeben. Wie beim ersten Ausführungsbeispiel ist ein Seitengitter 10 eines Backofens separat außerhalb des Backofens gezeigt. Wiederum wird ein horizontaler Draht 11 des Seitengitters 10 als Führungselement für die Auszugsführung verwendet.

Im Unterschied zum ersten Ausführungsbeispiel sind vorliegend keine Öffnungen 23 oder Kalotten 24 in der Laufschiene 20 ausgebildet, in die zumindest einige der Wälzkörper 32 in einer "Parkposition" eintauchen, um die Laufschiene 20 mit eingesetztem Wälzkörperkäfig 30 auf den Draht 11 aufzusetzen. Vielmehr wird abweichend davon hier zunächst der Wälzkörper 30 auf den Draht 11 aufgeclipst. Dazu ist der Wälzkörperkäfig 30 aus einem elastischen Material gefertigt, sodass sich sein c-förmiges Profil entsprechend weit aufbiegen kann.

Fig. 6a zeigt die einzelnen Komponenten der Auszugsführung im nicht zusammengesetzten Zustand, Fig. 6b zeigt den Wälzkörperkäfig 30 aufgeclipst auf den Draht 11 des Seitengitters 10. Fig. 6c gibt dieses nochmals in vergrößerter Darstellung wieder. Fig. 7a zeigt die Führungsschiene im zusammengesetzten Zustand, wobei Fig. 7b den Bereich des Wälzkörperkäfigs 30 nochmals vergrößert darstellt und in Fig. 7c ein Schnittbild durch die Auszugsführung im Bereich Wälzkörperkäfigs 30 wiedergegeben ist.

Nach dem Aufsetzen des Wälzkörperkäfigs 30 auf den Draht 11 wird die Laufschiene 20 bei entferntem Stopfen 22 über den Wälzkörperkäfig 30 entlang der Richtung des Drahtes 11 geschoben. Danach kann die Laufschiene 20 wiederum mit dem Stopfen 22 am Ende verschlossen werden.

Ein Verdrehen des Wälzkörpers 30 in der Laufschiene 20 ist bereits durch die Geometrie der Laufschiene 20 verhindert. Diese hat, wie auch beim ersten Ausführungsbeispiel, ein c-förmiges Profil, das im Wesentlichen auf einer quadratischen Grundform mit abgerundeten Ecken beruht. Die abgerundeten Ecken bilden die Laufbahn für die Wälzkörper 32 des Wälzkörperkäfigs 30. Zusätzlich ist an der Rückseite, d.h. der Öffnung gegenüberliegend, der Wälzkörperkäfig 30 mit einem Vorsprung 35 verstärkt. Dieser Vorsprung 35 ist so ausgebildet, dass er in der schlitzförmigen Öffnung der Laufschiene 20 verfährt und so zusätzlich eine Verdrehung des Wälzkörperkäfigs 30 innerhalb der Laufschiene 20 unterbindet.

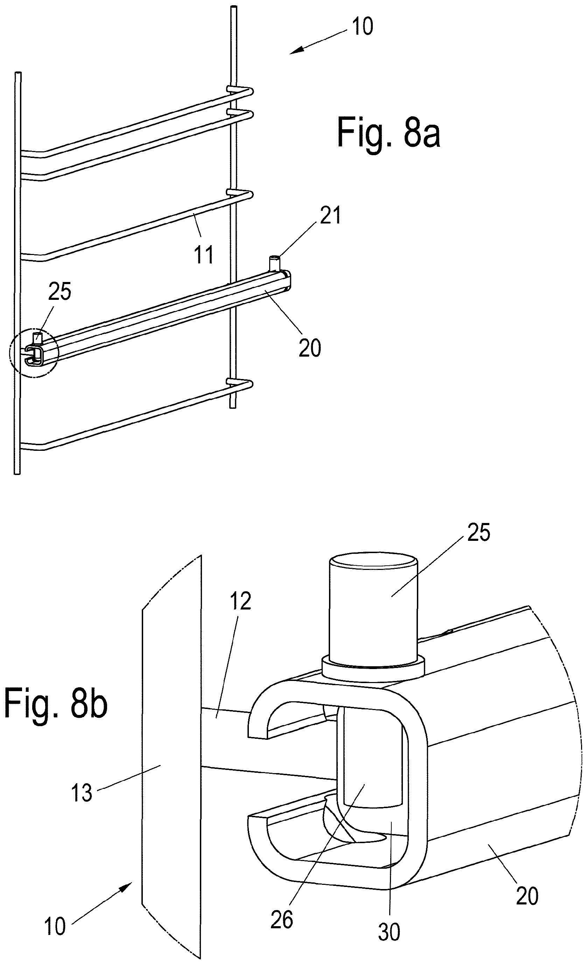

In Fig. 8a ist in der Übersicht, in Fig. 8b in einer Detailansicht, eine alternative Ausgestaltung des vorderen Anschlags für den Gargutträger gezeigt. Bei dieser alternativen Ausgestaltung, die beispielsweise bei der Auszugsführung gemäß dem ersten und dem zweiten Ausführungsbeispiel umgesetzt werden kann, ist anstelle des Stopfens 22 im vorderen Bereich der Laufschiene 20 ein Anlagebolzen 25 vorgesehen, der von oben in ein entsprechendes Loch auf der Oberseite der Laufschiene 20 eingesetzt wird. Im Gegensatz zum hinteren Anlagebolzen 21 ist dieser vordere Anlagebolzen 25 als ein Stecker ausgeführt, der mit einem Abschnitt 26 in das Innere der Laufschiene 20 hineinragt und so zum einen verhindert, dass der Wälzkörperkäfig 30 nach vorne aus der Laufschiene 20 verfahren kann und zum anderen verhindert, dass die Laufschiene 20 über den abgebogenen Abschnitt 12 des Drahtes 11 nach hinten in den Garraum hineingefahren werden kann. Alternativ zum Abschnitt 26 ist auch eine ausgestellte Lasche denkbar.

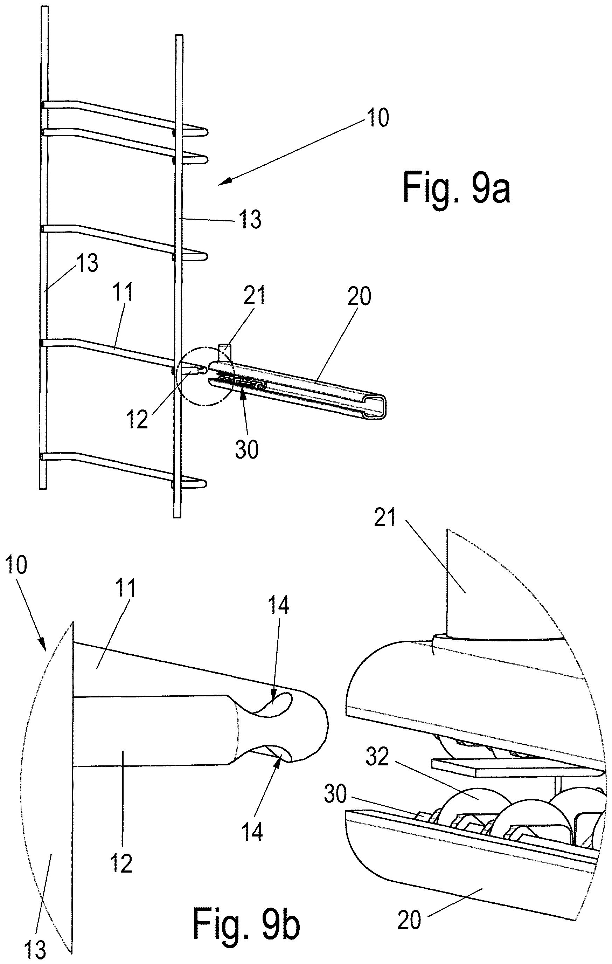

In Fig. 9 ist ein drittes Ausführungsbeispiel einer Auszugsführung dargestellt. Fig. 9a zeigt eine Laufschiene 20 mit eingesetztem Wälzkörperkäfig 30 vor dem Montieren auf einem Draht 11 eines Seitengitters 10 in der Übersicht. Fig. 9b zeigt eine Detailansicht im Bereich des vorderen abgewinkelten Endabschnitts 12 des Drahtes 11. Bei diesem Ausführungsbeispiel ist nicht die Laufschiene 20 bzw. der Wälzkörperkäfig 30 modifiziert, um die Laufschiene bzw. den Wälzkörperkäfig 30 am Draht 11 zu montieren. Vielmehr ist hier der vordere abgebogene Endabschnitt 12 des Drahtes 11 mit Einkerbungen 14 versehen, die ein Aufsetzen der Laufschiene 20 mit dem Wälzkörperkäfig 30 ermöglichen. Dieses Ausführungsbeispiel wird bevorzugt in Verbindung mit einem Reiter, beispielsweise einem Eckanschlag 40 wie in der Fig. 5 gezeigt, verwendet, um ein unbeabsichtigtes Herausziehen der Laufschiene 20 über das Ende des Drahtes 11 hinaus zu verhindern.

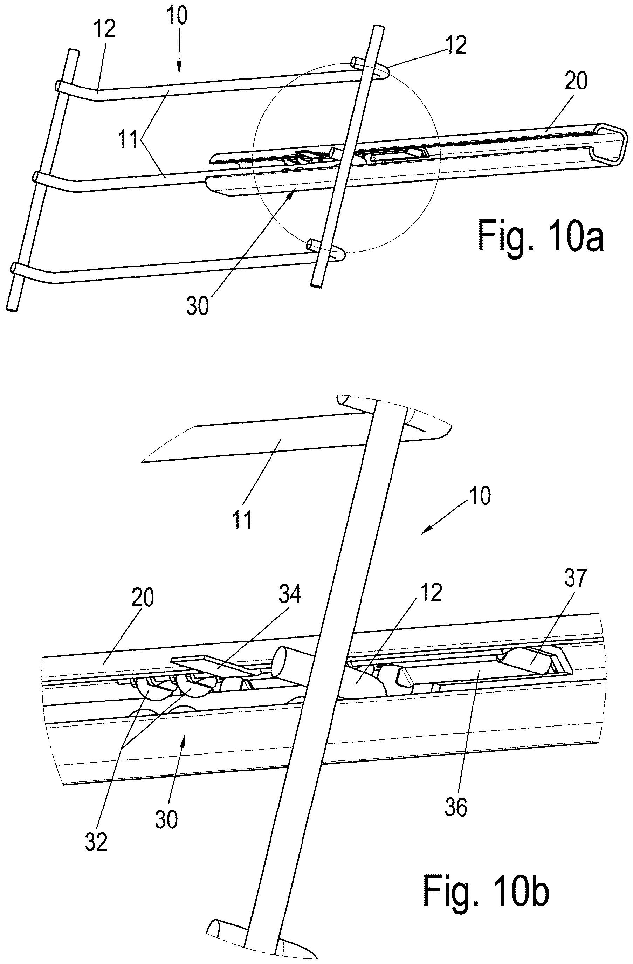

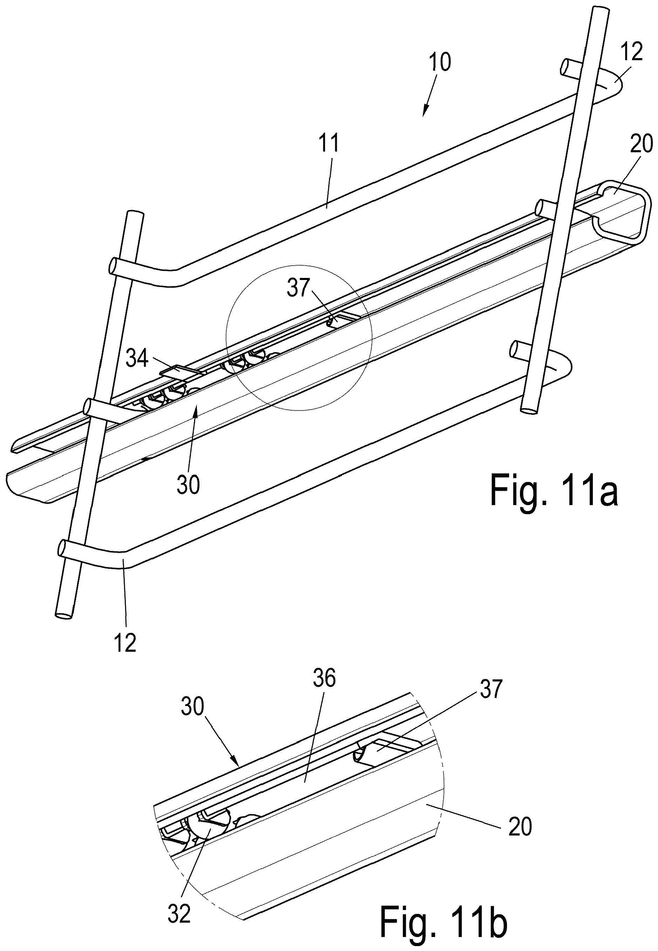

In den Fig. 10 bis 14 ist ein viertes Ausführungsbeispiel einer Auszugsführung dargestellt. Fig. 10a zeigt in ähnlicher Weise wie Fig. 3a die Auszugsführung in einem zusammengesetzten Zustand aufgesetzt auf ein Seitengitter 10, das hier ohne den Backofen 1 von der Rückseite des Seitengitters 10, also mit Blickrichtung in den Garraum 3 dargestellt ist. Fig. 10b zeigt einen Ausschnitt im Bereich des Wälzkörpers 30 detaillierter. Fig. 11 zeigt die Auszugsführung in gleicher Weise wie Fig. 10, jedoch in einer anderen Auszugsstellung.

Wie bei dem in Fig. 3 dargestellten Ausführungsbeispiel weist der Wälzkörperkäfig 30 hier eine in Richtung der Innenwand des Backofens 1 aus der Laufschiene 20 herausragende Grifflasche 34 auf. Die Auszugsschiene 20 selbst ist in Fig. 10a ohne Anlagebolzen 21 oder Anlagestopfen 22 dargestellt. Es versteht sich, dass derartige Anlageelemente wie bei den zuvor dargestellten Ausführungsbeispielen vorgesehen sein können.

Der Wälzkörperkäfig 30 des vierten Ausführungsbeispiels ist in einem mittleren Bereich analog zu dem Wälzkörperkäfig 30 des ersten Ausführungsbeispiels ausgebildet. Wie in den Ausschnittsvergrößerungen in den Fig. 10b und 11b ersichtlich ist, ist vorne oben (gesehen in Auszugsrichtung) und beabstandet von den Wälzkörpern 32 ein weiterer, hier rollenförmiger Zusatzwälzkörper 37 vorgesehen.

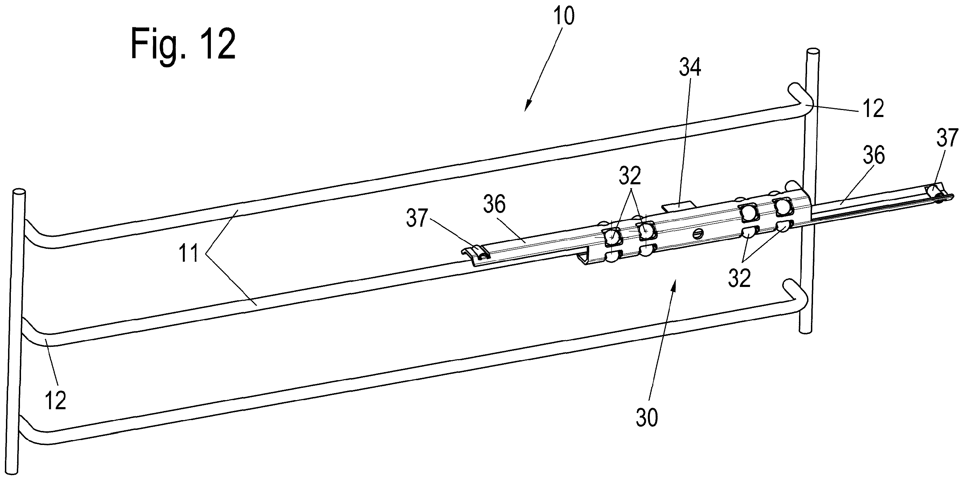

Fig. 12 zeigt den Wälzkörperkäfig 30 aufgesetzt auf das Seitengitter 10 ohne die Auszugsschiene 20. Wie in Fig. 12 gut ersichtlich ist, weist der Wälzkörperkäfig 30 an seinem vorderen oberen Ende einen Ausleger 36 auf, in dessen vorderem Ende der Zusatzwälzkörper 37 angeordnet ist. Analog dazu ist am hinteren unteren Ende des Wälzkörperkäfigs 30 ein weiterer Ausleger 36 angeordnet, der ebenfalls einen Zusatzwälzkörper 37 trägt. Im Bereich der Ausleger 36 ist das im mittleren Bereich c-förmige Profil des Wälzkörperkäfigs 30 zu einem Steg reduziert.

Wenn sich der entsprechende Zusatzwälzkörper 37 im Bereich des Drahts 11 des Seitengitters 10 befindet, liegt der Zusatzwälzkörper 37 an diesem Draht von oben bzw. unten an. Anders als die Wälzkörper 32 kann sich der Zusatzwälzkörper 37 jedoch über den abgebogenen Endabschnitt 12 des Seitengitters hinausbewegen. Dieses ist beispielsweise in der perspektivischen Darstellung in Fig. 10b dargestellt. Solange der vordere der Zusatzwälzkörper 37 sich im Bereich des Drahts 11 befindet, nimmt er vom Gargutträger auf die Laufschiene 20 aufgebrachte Gewichtskräfte auf und minimiert so ein Abkippen des vorderen Endes der Laufschiene 20. Wenn der vordere Zusatzwälzkörper 37 bei einem weiteren Auszug der Auszugsvorrichtung über den abgebogenen Endabschnitt 12 des Drahts 11 hinausbewegt wird, liegt noch der hintere der Zusatzwälzkörper 37 an der Unterseite des Drahts 11 auf und wirkt einer Verdrehung des Wälzkörperkäfigs 30 am Draht 11 entgegen. Auch dadurch wird eine horizontale Führung der Laufschiene 20 der Auszugsführung unterstützt.

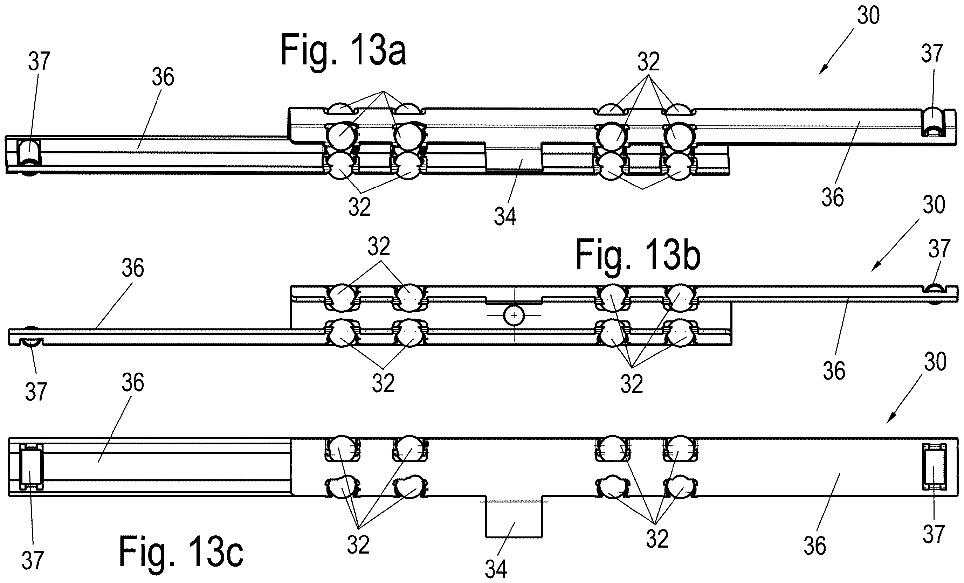

In Fig. 13 ist der Wälzkörperkäfig 30 dieses Ausführungsbeispiels nochmals in verschiedenen Ansichten dargestellt. Fig. 13a zeigt den Wälzkörperkäfig 30 in einer perspektivischen Ansicht von schräg oben, Fig. 13b zeigt eine Seitenansicht und Fig. 13c eine Draufsicht auf den Wälzkörperkäfig 30.

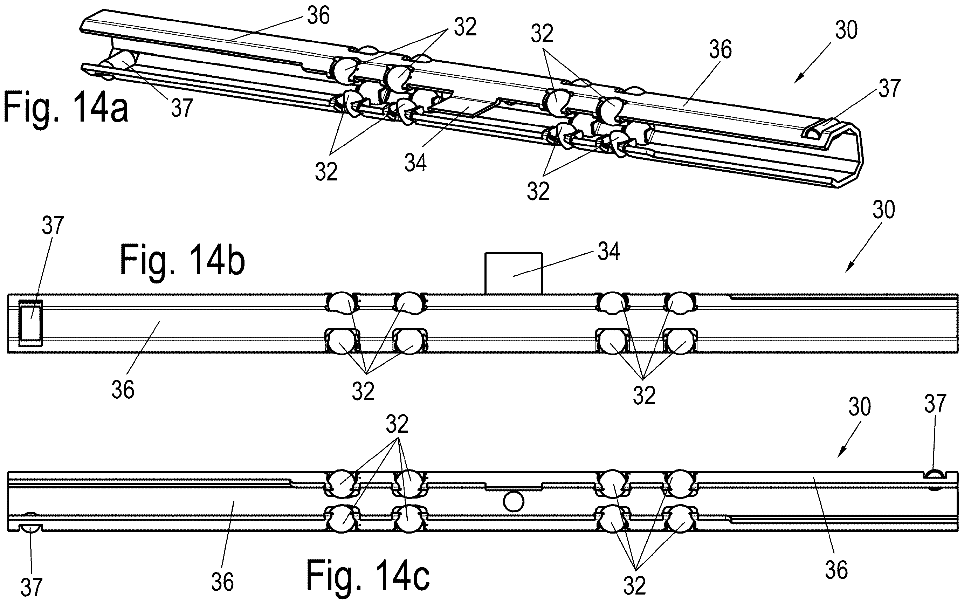

In gleicher Weise wie in Fig. 13 ist in Fig. 14 eine alternative Ausgestaltung des Wälzkörperkäfig 30 des vierten Ausführungsbeispiels der Auszugsführung dargestellt. Ebenso wie der in den Fig. 10 bis 13 dargestellte Wälzkörperkäfig 30 weist der in Fig. 14 gezeigte Wälzkörperkäfig 30 von den Wälzkörpern 32 beabstandete Zusatzwälzkörper 37 auf. Im Unterschied zu der zuvor gezeigten Ausgestaltung ist das Profil des Wälzkörperkäfigs 30 hier im Bereich der Ausleger 36 nicht auf einen Steg reduziert, sondern ebenfalls, wie im mittleren Bereich, c-förmig ausgestaltet.

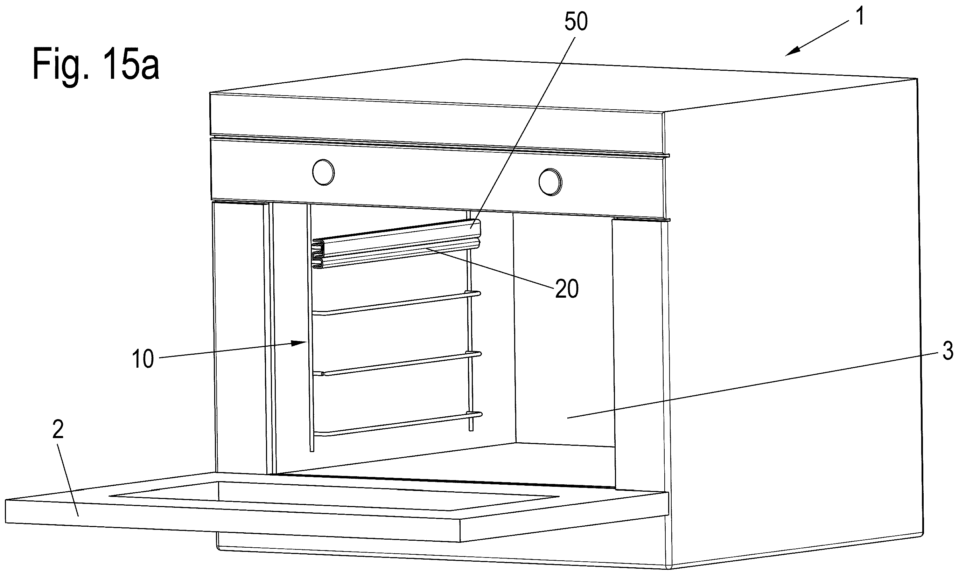

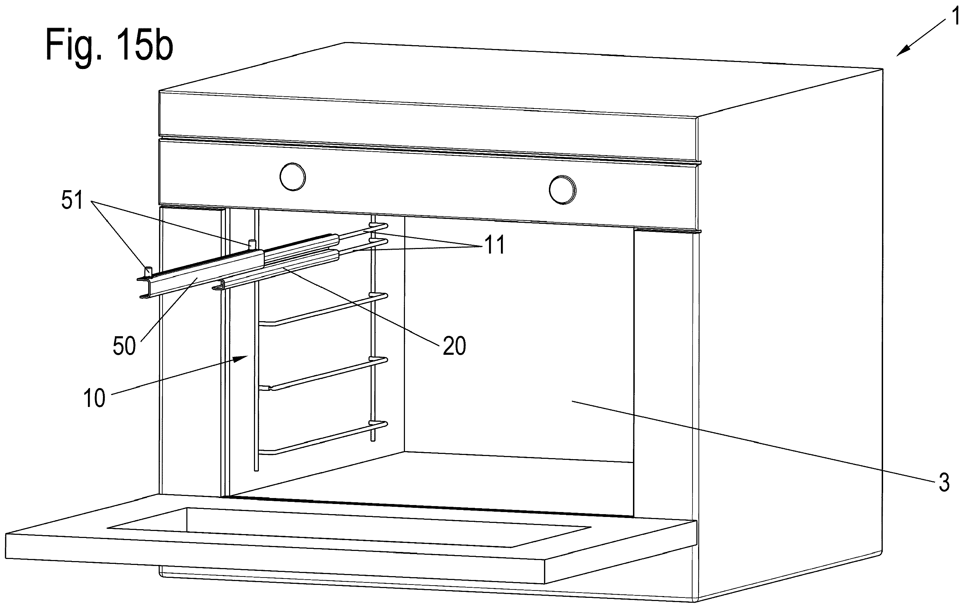

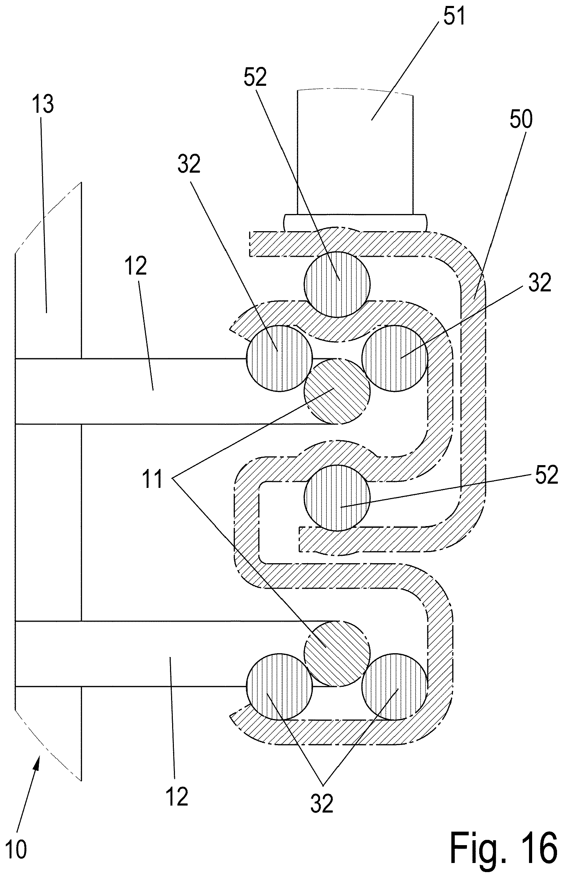

Fig. 15 zeigt in Teilfiguren 15a und 15b in analoger Weise wie Fig. 1 ein weiteres Ausführungsbeispiel einer Auszugsführung eingesetzt in einem Backofen 1, wobei Drähte 11 eines Seitengitters 10 des Backofens 1 als Führungselemente verwendet werden. Fig. 16 zeigt die Auszugsführung in einer Schnittdarstellung.

Im Unterschied zu den zuvor gezeigten Ausführungsbeispielen werden bei diesem Ausführungsbeispiel zwei benachbarte Drähte 11 als Führungselement verwendet. Weiterhin ist die Auszugsführung als ein sogenannter Vollauszug mit drei sich gegeneinander bewegenden Elementen bzw. Schienen ausgebildet. Zu diesem Zweck ist eine weitere Laufschiene 50 vorgesehen, die verfahrbar auf der Laufschiene 20 gelagert ist, welche sich wiederum - wie gehabt - gelagert über Wälzkörper 32 des Wälzkörperkäfigs 30 auf dem ortsfesten Führungselement, also den Drähten 11 des Seitengitters 10, bewegt. Der Gargutträger wird entsprechend auf die weitere Laufschiene 50 aufgelegt. Zu diesem Zweck sind im vorderen und hinteren Bereich Anlagebolzen 51 vorgesehen, deren Funktion analog zu den Anlagebolzen 21 oder 25 bzw. dem Stopfen 22 der ersten Ausführungsbeispiele ist.

In der Schnittdarstellung der Fig. 16 ist ersichtlich, dass die Laufschiene 20 den Querschnitt eines doppelten S aufweist, wobei im oberen Teil der Laufschiene 20 Laufbahnen ausgebildet sind, in denen weitere Wälzkörper 52 positioniert sind, über die die weitere Laufschiene 50 verfahrbar an der Laufschiene 20 gelagert ist. Sowohl für die Wälzkörper 32 als auch für die Wälzkörper 52 sind, unabhängig voneinander, Wälzkörperkäfige vorgesehen. Diese sind aus Gründen der Übersichtlichkeit in der Fig. 11 nicht dargestellt.

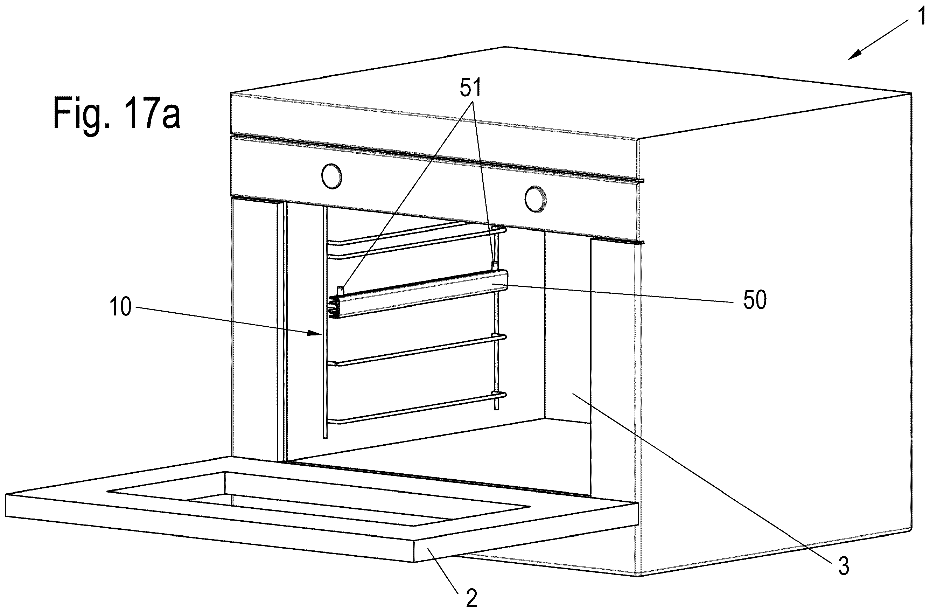

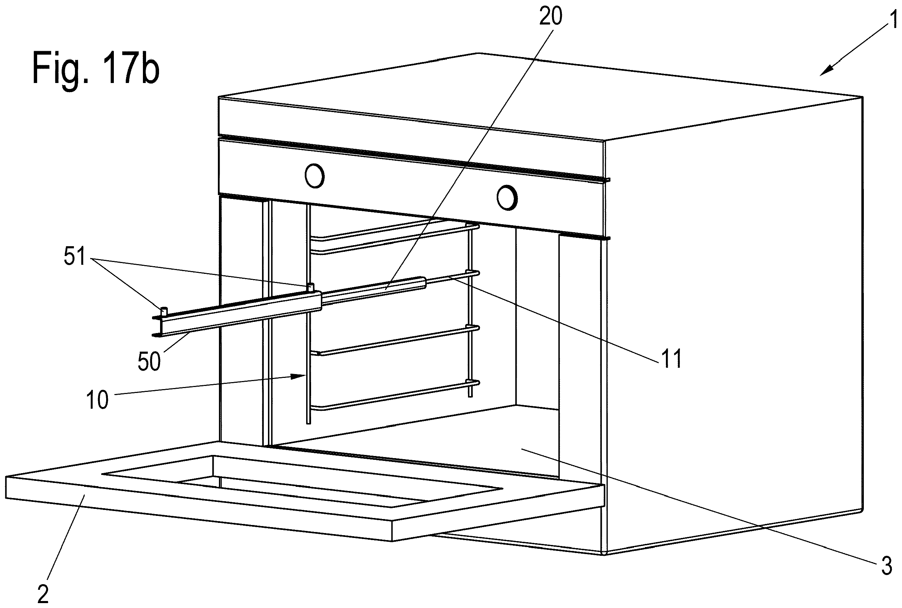

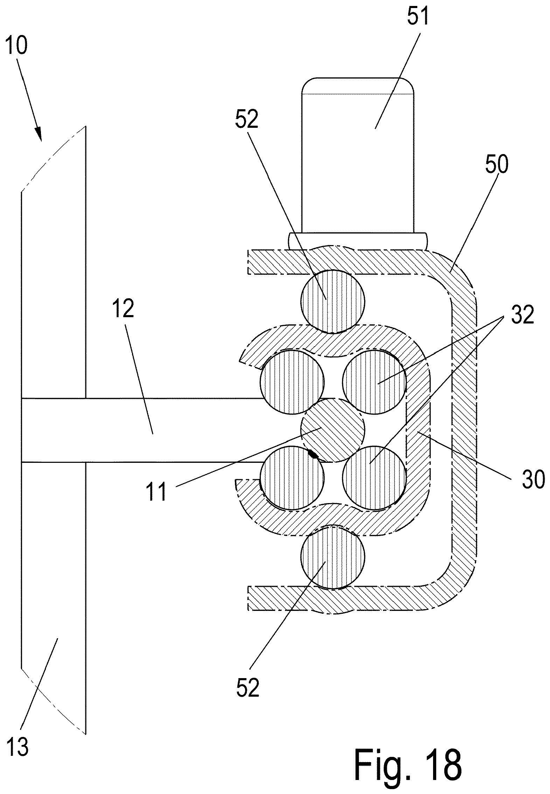

In den Fig. 17 und 18 ist in gleicher Art wie in den Fig. 15 und 16 ein weiteres Ausführungsbeispiel eines Vollauszugs oder Überauszugs mit einer Laufschiene 20 und einer weiteren Laufschiene 50 angegeben. Im Unterschied zum Ausführungsbeispiel der Fig. 15 und 16 wird vorliegend nur ein Draht 11 für die Auszugsführung benötigt. Bei dieser Auszugsführung ist, wie Fig. 13 im Schnittbild gut zeigt, die Laufschiene 20 im Prinzip so ausgebildet, wie in den ersten Ausführungsbeispielen der Fig. 1 bis 14. Zusätzlich sind auf der Oberseite und der Unterseite der Laufschiene 20 wiederum Laufbahnen für die weiteren Wälzkörper 52 eingeprägt. Über diese wird die weitere Laufschiene 50, die hier u-förmig ausgestaltet ist und die Laufschiene 20 im Wesentlichen vollständig umfasst, geführt wird.

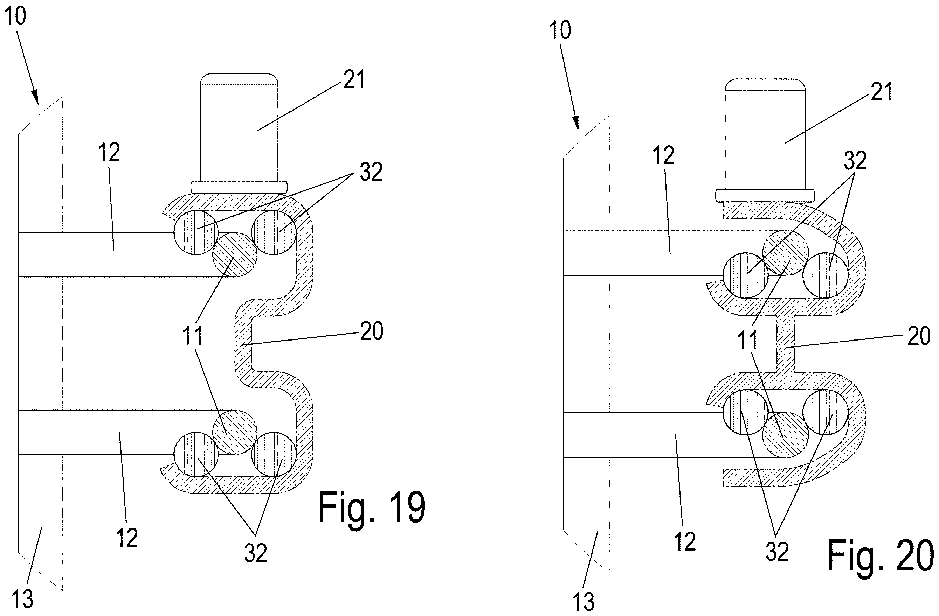

In den Fig. 19 und 20 sind in Form von Schnittbildern, ähnlich den Fig. 16 und 18, zwei weitere Ausführungsbeispiele einer Auszugsführung angegeben. Diese Auszugsführungen sind wiederum wie die Beispiele in den Fig. 1 bis 14 als einfache Auszugsführungen mit nur einer Laufschiene 20 ausgebildet. In beiden Fällen werden jedoch ähnlich wie beim Ausführungsbeispiel der Fig. 15 und 16 zwei benachbarte Drähte 11 des Seitengitters 10 zur Führung eingesetzt. Vorteilhaft an dieser Art der Führung ist eine höhere Belastbarkeit der Auszugsführung, beispielsweise wenn Gargutträger mit einer hohen Masse belastbar sein sollen.

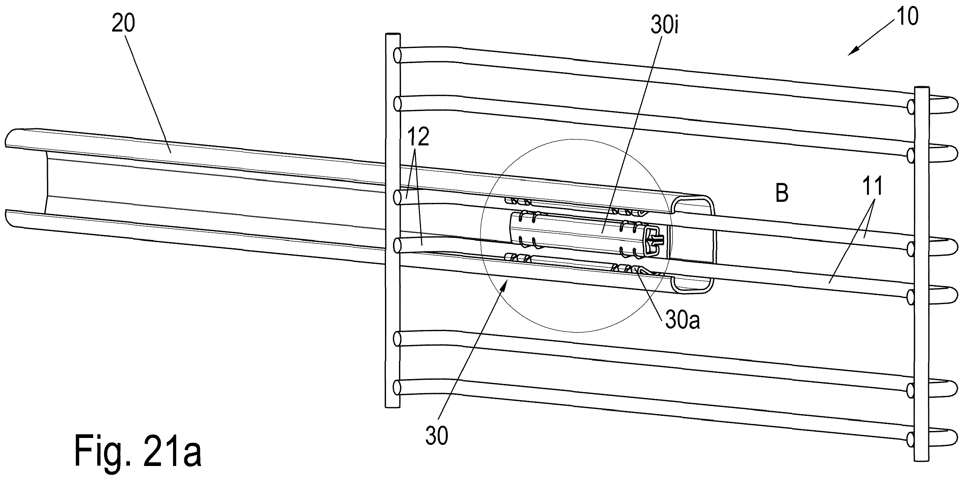

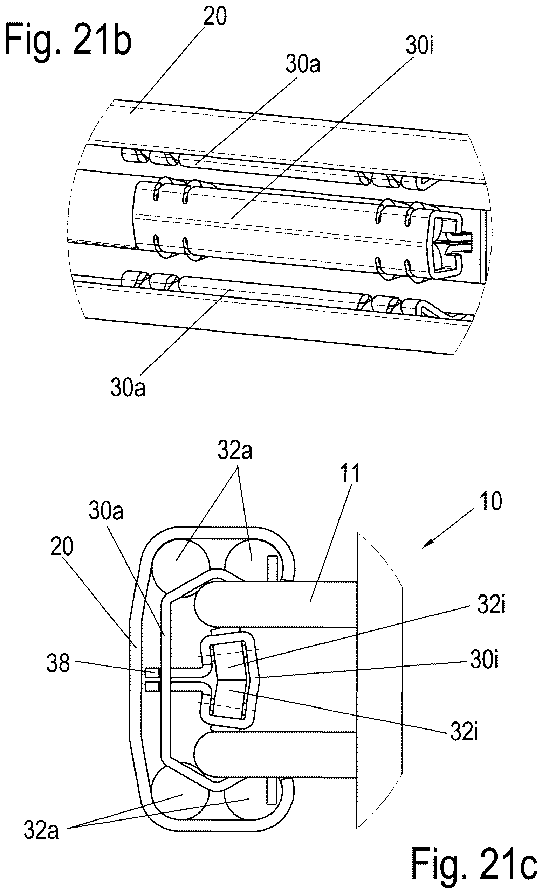

Ein weiteres derartiges Ausführungsbeispiel einer als Einfachauszug ausgebildeten Auszugsführung, bei der zwei benachbarte Drähte 11 des Seitengitters 10 zur Führung eingesetzt werden, ist in den Fig. 21 bis 24 dargestellt.

Beim vorliegenden Ausführungsbeispiel ist der Wälzkörperkäfig 30 zweiteilig ausgeführt, mit einem äußeren Wälzkörperkäfig 30a und einem inneren Wälzkörperkäfig 30i.

In der Übersichtsdarstellung der Fig. 21a und in der Detailvergrößerung der Fig. 21b ist die Auszugsführung in zusammengesetztem Zustand an einem Seitengitter 10 eines Backofens 1 festgelegt wiedergegeben. Das Seitengitter 10 ist von seiner der Rückseite her dargestellt, sodass ein Einblick in die c-förmige Laufschiene 20 gegeben ist. Die Laufschiene 20 wird in Öffnungsrichtung mit einem nicht dargestellten Verschlusselement versehen. Weiterhin wird ein nicht dargestelltes hinteres Begrenzungselement an der der Rückwand des Korpus zugewandten Seite an der Laufschiene 20 vorgesehen. Zwischen dem vorderen Verschlusselement und dem hinteren Begrenzungselement können Gargutträger aufgenommen werden. Das Verschlusselement und das Begrenzungselement können beispielsweise die Anlagebolzen 21 oder die Anlagestopfen 22 der zuvor beschriebenen Ausführungsbeispiele ausgestaltet sein.

Wie beispielsweise die Frontalansicht der Fig. 21c zeigt, ist der äußere Wälzkörperkäfig im Wesentlichen C-förmig aufgebaut und weist äußere Wälzkörper 32a auf, die auf der Oberseite des oberen der beiden Drähte 11 bzw. der Unterseite des unteren der beiden Drähte 11 angeordnet sind. An dem äußeren Wälzkörperkäfig 30a ist ein innerer Wälzkörperkäfig 30i durch eine verrastende Einsteckverbindung festgelegt. Der innere Wälzkörperkäfig 30i weist angeordnet in zwei Reihen hier jeweils vier innere Wälzkörper 32i auf, die vorwiegend als Kegelstumpfrollen ausgeführt sind. Sowohl die Achsen der inneren Wälzkörperrollen als auch die Laufflächen im Kontaktpunkt mit dem Draht 11 sind gegenüber einer horizontalen Ausrichtung geneigt. Es ist auch denkbar, die Wälzkörperanordnung umzukehren.

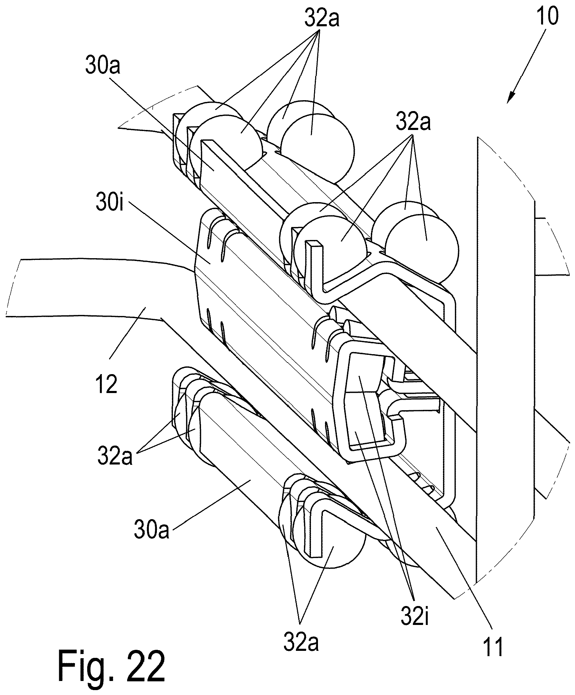

Montiert wird die Auszugsführung durch ein Aufschnappen der Einheit aus der Laufschiene 20 und dem Wälzkörperkäfig 30a auf die parallel verlaufenden Drähte des Seitengitters 10. Hierbei wird die Elastizität der parallel verlaufenden Drähte 11 ausgenutzt. Durch das kurzfristige Zurückweichen der Drähte 11 kann der Wälzkörperkäfig 30a die beiden Drähte umgreifen. Die Einheit aus Laufschiene 20, Wälzkörperkäfig 30a und Wälzkörpern 32a wird quer zur Auszugsrichtung der zu montierenden Auszugsführung auf die Drähte 11 aufgesetzt. Die Einheit aus Laufschiene 20 und Wälzkörperkäfig 30a enthält bereits die Wälzkörper 32a. Sodann wird der innere Kugelkäfig 30i von der Innenseite des Backofengitters 10 her eingesetzt und mit dem äußeren Wälzkörperkäfig 30a durch Rastmittel 38 verrastet. Der so auf das Seitengitter 10 aufgesetzte und zusammengefügte Wälzkörperkäfig 30 ist in Fig. 22 nochmals perspektivisch im Detail dargestellt. Bei Benutzung der zusammengebauten Auszugsführung ist ein solches Biegen der Drähte 11 aufeinander zu durch den eingesetzten inneren Wälzkörperkäfig 30i verhindert.

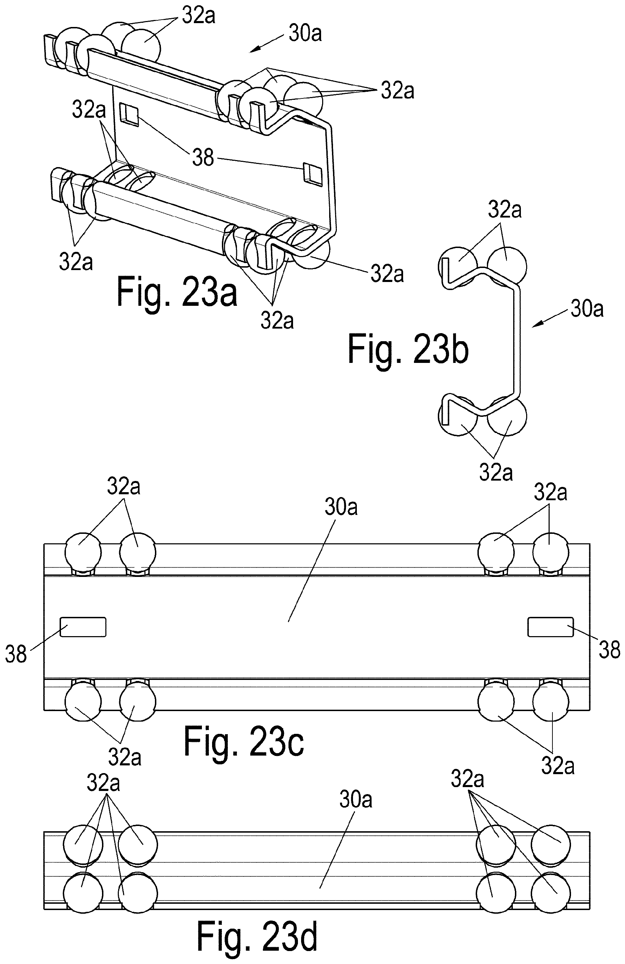

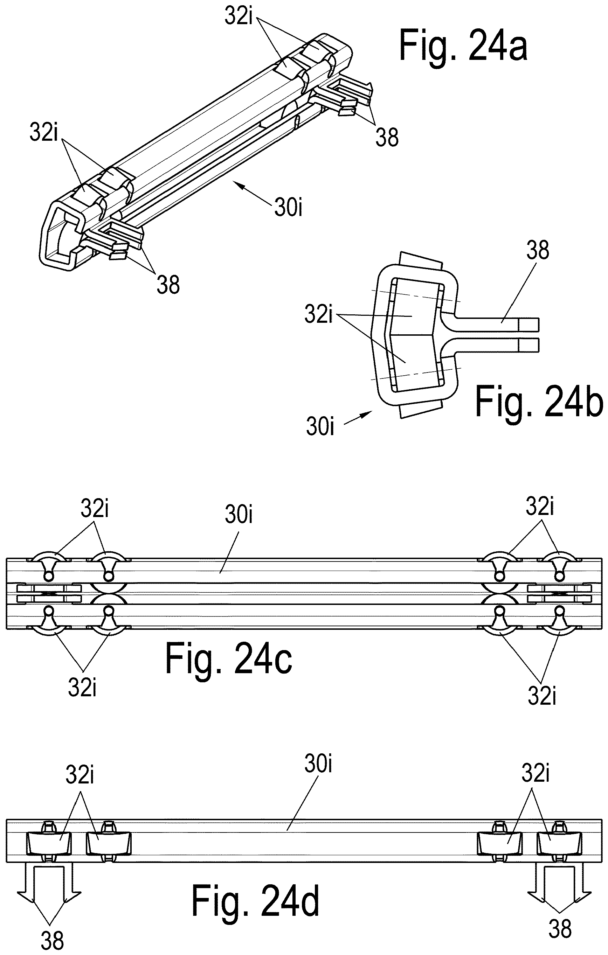

Details des äußeren Wälzkörperkäfigs 30a sind in der Fig. 23 in verschiedenen Teilbildern a bis d und Details des inneren Wälzkörperkäfigs 30i in Fig. 24 ebenfalls in den Teilbildern a bis d nochmals dargestellt. Dabei zeigt jeweils das Teilbild a eine perspektivische Ansicht, das Teilbild b eine Seitenansicht in Richtung der Längserstreckung der Auszugsführung, das Teilbild c eine Seitenansicht quer zu der im Teilbild b dargestellten Blickrichtung und das Teilbild d eine Draufsicht von oben bzw. unten auf den jeweiligen äußeren bzw. inneren Wälzkörperkäfig 30a, 30i. In diesen Figuren sind die zur Verbindung von innerem und äußerem Wälzkörperkäfig 30i, 30a eingesetzten Rastmittel 38 gut zu erkennen.

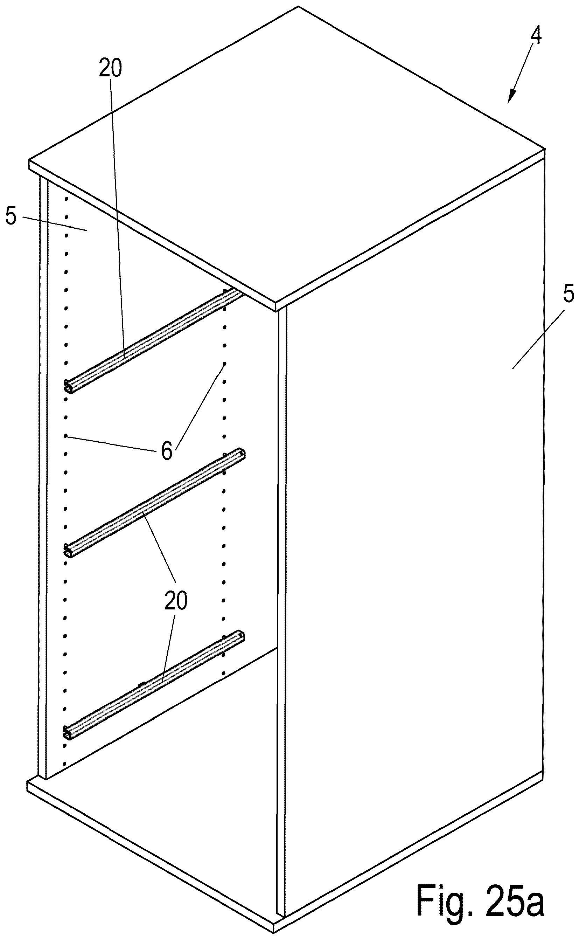

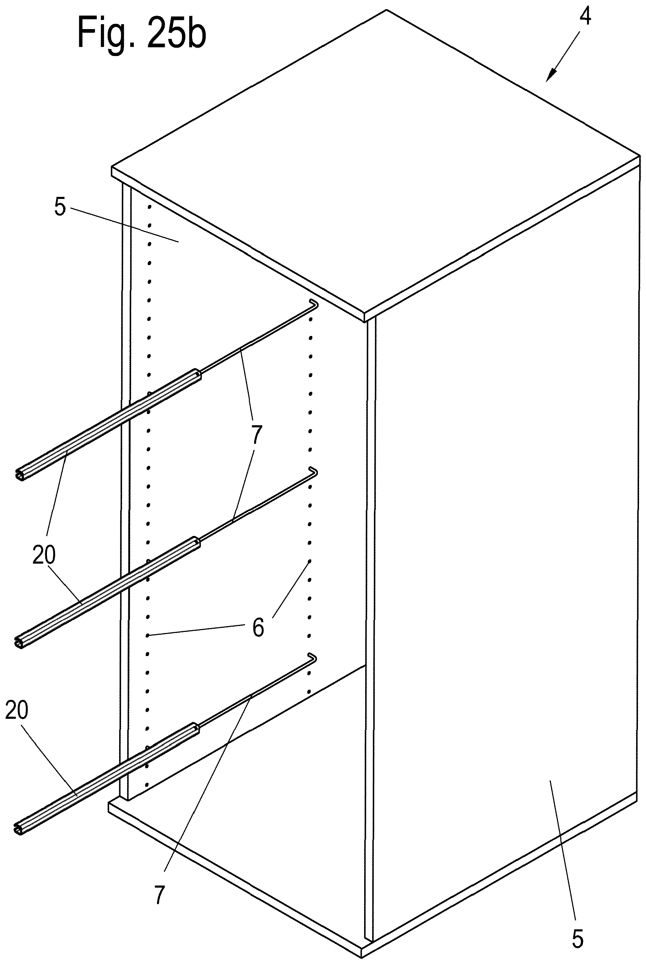

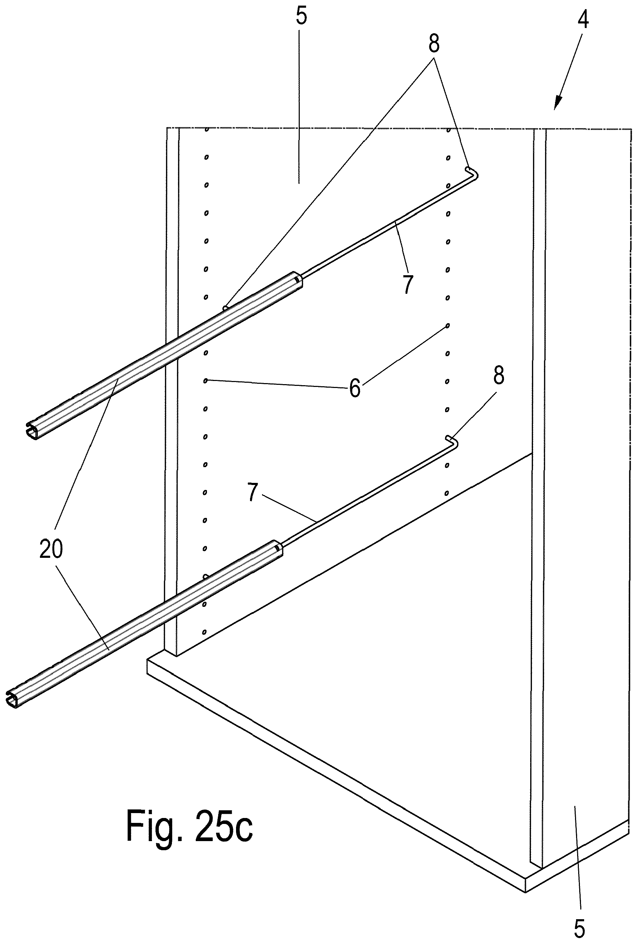

In der Fig. 25 ist in drei Teilbildern eine erfindungsgemäße Auszugsführung zur Verwendung in einem Möbelkorpus 4 dargestellt. Als Möbelkorpus 4 ist hier beispielhaft der Korpus eines Schubkastenschranks angegeben. Dieser weist zwei parallele Seitenteile 5 auf, die jeweils an ihrer inneren Seite mit einer Lochreihe 6 versehen sind. Derartige Möbelkorpusse sind bekannt, wobei in die Löcher der Lochreihen 6 entweder Haltepins für Regalbretter eingesetzt werden oder Auszugsführungen über Haltewinkel angeschraubt werden.

Fig. 25a zeigt beispielhaft drei in den Möbelkorpus 4 eingesetzte erfindungsgemäße Auszugsführungen, von denen in dieser Darstellung Laufschienen 20 sichtbar sind. In Fig. 25b sind die Auszugsführungen in einem ausgezogenen Zustand dargestellt. In dieser Darstellung sind die Führungselemente sichtbar, an denen die Laufschienen 20 mithilfe von einem oder mehreren in dieser Darstellung nicht sichtbaren Wälzkörperkäfigen und mit mehreren Wälzkörpern verfahrbar gelagert sind.

Die Führungselemente sind u-förmig gebogene Bügel aus Draht 7, die in die Löcher der Lochreihen 6 eingesteckt sind. Dieses ist in einer vergrößerten Darstellung des Möbelkorpus 4 in Fig. 25c detaillierter dargestellt. Im oberen Bereich der Figur ist eine Auszugsführung mit einem derartigen Bügel aus Draht 7 mit abgebogenen Endabschnitten 8 gezeigt, bevor dieser in die Lochreihen 6 eingesteckt ist. Die Auszugsführung im unteren Bereich der Fig. ist bereits mit den abgebogenen Endabschnitten 8 jeweils in eine Öffnung der Lochreihen 6 eingesteckt. Bezüglich der Ausgestaltungen der Laufschiene 20, des hier nicht sichtbaren Wälzkörperkäfigs, wird auf die zuvor beschriebenen Ausführungsbeispiele verwiesen. Durch den Einsatz eines Material sparenden und kostengünstig herzustellenden Bügels aus Draht 7 als Führungselement der Auszugsführung kann eine solche Auszugsführung zum einen kostengünstig und zum anderen sehr leicht und werkzeuglos nachrüstbar in einem Möbelkorpus 4 mit Lochreihen 6 verwendet werden. An der Laufschiene 20 können zur Festlegung der Laufschiene 20 an bewegbaren Möbelteilen, beispielsweise Schubkästen, entsprechende und aus dem Stand der Technik bekannte Befestigungsmittel vorgesehen sein.

Es wird angemerkt, dass die zuvor in den Ausführungsbeispielen der Fig. 15 bis 18 dargestellten Vollauszüge bzw. Überauszüge ebenso innerhalb eines Möbelkorpus durch Verwendung von einem oder zwei benachbarten Drahtbügeln 7 umgesetzt werden können. Auch die zuvor in den Fig. 19 bis 24 wiedergegebenen einfachen Auszugsführungen, bei denen zwei parallele Drähte als ortsfestes Führungselement eingesetzt werden, sind durch entsprechend zwei Bügel aus Draht 7 in einem Möbelkorpus 4 realisierbar.

Alle dargestellten Varianten des erfindungsgemäßen Führungssystems sind auch wieder demontierbar und erneut, beispielsweise in einer anderen Ebene, erneut montierbar. Montage bzw. Demontage des Führungssystems sind reversibel.

### Bezugszeichenliste

- 1: Backofen
- 2: Tür
- 3: Garraum
- 4: Möbelkorpus
- 5: Seitenteile
- 6: Lochreihe
- 7: Bügel aus Draht
- 8: abgebogener Endabschnitt

- 10: Seitengitter
- 11: Draht
- 12: abgebogener Endabschnitt
- 13: Pfosten
- 14: Einkerbung

- 20: Laufschiene
- 21: Anlagebolzen
- 22: Anlagestopfen
- 23: Öffnungen
- 24: Tasche
- 25: Stecker
- 26: Abschnitt

- 30: Wälzkörperkäfig
- 31: Wälzkörpertasche
- 32: Wälzkörper
- 33: Steg
- 34: Grifflasche
- 35: Vorsprung
- 36: Ausleger
- 37: Zusatzwälzkörper
- 38: Rastmittel

- 30a: äußerer Wälzkörperkäfig
- 32a: äußerer Wälzkörper
- 30i: innerer Wälzkörperkäfig
- 32i: innerer Wälzkörper
- 40: Eckanschlag

- 50: weitere Laufschiene
- 51: Anlagebolzen
- 52: weitere Wälzkörper

- X: freier Abstand
- Y: Durchmesser

## Patentansprüche

1. Auszugsführung, insbesondere für ein Möbel oder ein Haushaltsgerät, mit einem ortsfesten Führungselement und mindestens einer Laufschiene (20), wobei zwischen dem Führungselement und der Laufschiene (20) mindestens ein Wälzkörperkäfig (30) mit einer Mehrzahl von Wälzkörpern (32) angeordnet ist, wobei das Führungselement von mindestens einem Draht (7, 11) gebildet ist, der an mindestens einem Ende einen abgebogenen Endabschnitt (8, 12) aufweist, **dadurch gekennzeichnet, dass** die Laufschiene (20) Öffnungen (23) oder nach außen ausgeprägte Kalotten (24) aufweist, in die zumindest einige der Wälzkörper (32) eingedrückt werden können, um die abgebogenen Endabschnitte (8, 12) des Drahts (7, 11) oder den Draht (11) zwischen mindestens zwei gegenüberliegenden Wälzkörpern (32) hindurchführen zu können.

2. Auszugsführung nach Anspruch 1, bei der der Draht (7, 11) zumindest in einem Abschnitt, in dem er in einem Kontakt mit den Wälzkörpern (32) ist, ein durchgängig gleiches Profil aufweist, insbesondere mit einem runden, elliptischen, viereckigen, insbesondere quadratischen oder rautenförmigen, oder ovalen Querschnitt.

3. Auszugsführung nach Anspruch 1 oder 2, bei der der Draht (7, 11) frei tragend ist.

4. Auszugsführung nach einem der Ansprüche 1 bis 3, bei der die Laufschiene (20) ein c-förmiges Profil mit einer schlitzförmigen Öffnung aufweist.

5. Auszugsführung nach Anspruch 4, bei dem abgebogene Endabschnitte (8, 12) des Drahts (7, 11) durch die schlitzförmigen Öffnung der Laufschiene (20) führen, wodurch eine Verdrehung der Laufschiene (20) um den Draht (11) eingeschränkt ist.

6. Auszugsführung nach einem der Ansprüche 1 bis 5, bei dem der Wälzkörperkäfig (30) für zumindest diejenigen der Wälzkörper (32), die in Öffnungen (23) oder nach außen ausgeprägte Kalotten (24) hineinbewegt werden können, Wälzkörpertaschen (31) aufweist, in denen die Wälzkörper (32) in zwei unterschiedlichen Positionen gehalten sind.

7. Auszugsführung nach Anspruch 6, bei dem die Wälzkörpertasche (31) eine durch einen Steg (33) gebildete Engstelle aufweist, durch die der Wälzkörper (32) passieren muss, um von einer in die andere der beiden unterschiedlichen Positionen zu gelangen.

8. Auszugsführung nach einem der Ansprüche 1 bis 7, bei der im Wälzkörperkäfig (30) in einem vorderen oberen Bereich und/oder in einem hinteren unteren Bereich von den Wälzkörpern (32) beabstandete Zusatzwälzkörper (37), insbesondere zylindrische Rollen, vorgesehen sind, die mit ihrer Lauffläche am Draht (7, 11) anliegen und die über den mindestens einen abgebogenen Endabschnitt (8, 12) des Drahts (7, 11) hinausbewegbar sind.

9. Auszugsführung nach einem der Ansprüche 1 bis 8, bei der ein an dem Draht festlegbarer Reiter vorgesehen ist, der als Anschlag für den Wälzkörperkäfig dient.

10. Auszugsführung nach Anspruch 9, bei der der Reiter als Eckanschlag (40) ausgebildet ist, der an dem Übergang zum dem abgebogenen Endabschnitt (8, 12) festlegbar ist.

11. Auszugsführung nach einem der Ansprüche 1 bis 10, ausgebildet als Vollauszug oder Überauszug und aufweisend eine weitere Laufschiene (50), die über weitere Wälzkörper (52) verfahrbar an der Laufschiene (20) gelagert ist.

12. Auszugsführung nach einem der Ansprüche 1 bis 11, bei der zwei parallele und beabstandete Drähte (7, 11) als Führungselement dienen und bei der der Wälzkörperkäfig (30) zweiteilig ausgebildet ist mit einem äußeren Wälzkörperkäfig (30a) und einem inneren Wälzkörperkäfig (30i), wobei der innere Wälzkörperkäfig (30i) innere Wälzkörper (32i) trägt, die zwischen den zwei parallelen und beabstandeten Drähte (7, 11) laufen.

13. Auszugsführung nach einem der Ansprüche 1 bis 12, bei der der Draht (11) Teil eines Seitengitters (10) eines Gargeräts ist.

14. Auszugsführung nach einem der Ansprüche 1 bis 13, bei der der Draht (7) mit den abgebogenen Endabschnitten (8) in Bohrungen, die in einen Möbelkorpus (4) eingebracht sind, festlegbar ist, wobei
die abgebogenen Endabschnitte (8) vorzugsweise einen Abstand voneinander aufweisen, der einem Abstand von Lochreihen (6) in dem Möbelkorpus (4) entspricht.

15. Nachrüstsatz für ein Haushaltsgerät oder Möbel, aufweisend eine Auszugsführung gemäß einem der Ansprüche 1 bis 14.

16. Möbel oder Haushaltsgerät **dadurch gekennzeichnet, dass** das Möbel oder Haushaltsgerät eine Auszugsführung nach einem der Ansprüche 1 bis 14 aufweist.

## Claims

1. A pullout guide, in particular for an item of furniture or a household appliance, having a stationary guide element and at least one slide rail (20), wherein at least one roller body cage (30) having a plurality of roller bodies (32) is arranged between the guide element and the slide rail (20), wherein the guide element is formed by at least one wire (7, 11) that has a bent-over end section (8, 12) on at least one end, **characterized in that** the slide rail (20) has openings (23) or outwardly embossed spherical caps (24), into which at least some of the roller bodies (32) can be pressed, to be able to guide the bent-over end sections (8, 12) of the wire (7, 11) or the wire (11) between at least two opposing roller bodies (32).

2. The pullout guide according to Claim 1, wherein the wire (7, 11), at least in a section in which it is in contact with the roller bodies (32), has a continuously identical profile, in particular having a round, elliptical, rectangular, in particular square or diamond-shaped, or oval cross section.

3. The pullout guide according to Claim 1 or 2, wherein the wire (7, 11) is self-supporting.

4. The pullout guide according to one of Claims 1 to 3, wherein the slide rail (20) has a C-shaped profile having a slotted opening.

5. The pullout guide according to Claim 4, wherein bent-over end sections (8, 12) of the wire (7, 11) lead through the slotted opening of the slide rail (20), whereby twisting of the slide rail (20) around the wire (11) is restricted.

6. The pullout guide according to one of Claims 1 to 5, wherein the roller body cage (30), for at least the roller bodies (32) which can be moved into openings (23) or outwardly embossed spherical caps (24), has roller body pockets (31), in which the roller bodies (32) are held in two different positions.

7. The pullout guide according to Claim 6, wherein the roller body pocket (31) has a bottleneck formed by a web (33), through which the roller body (32) must pass to move from one into the other of the two different positions.

8. The pullout guide according to one of Claims 1 to 7, wherein, in the roller body cage (30), in a top front region and/or in a bottom rear region, auxiliary roller bodies (37), in particular cylindrical rolls, are provided spaced apart from the roller bodies (32), which press with their running surface against the wire (7, 11) and are movable beyond the at least one bent-over end section (8, 12) of the wire (7, 11).

9. The pullout guide according to one of Claims 1 to 8, wherein a rider which can be fixed on the wire is provided, which is used as a stop for the roller body cage.

10. The pullout guide according to Claim 9, wherein the rider is implemented as a corner stop (40) that can be fixed at the transition to the bent-over end section (8, 12).

11. The pullout guide according to one of Claims 1 to 10, implemented as a full pullout or overextension pullout and having a further slide rail (50), which is mounted via further roller bodies (52) so it is movable on the slide rail (20).

12. The pullout guide according to one of Claims 1 to 11, wherein two parallel and spaced-apart wires (7, 11) are used as the guide element, and wherein the roller body cage (30) is implemented in two parts having an outer roller body cage (30a) and an inner roller body cage (30i), wherein the inner roller body cage (30i) carries inner roller bodies (32i), which run between the two parallel and spaced-apart wires (7, 11).

13. The pullout guide according to one of Claims 1 to 12, wherein the wire (11) is part of a side rail (10) of a cooking appliance.

14. The pullout guide according to one of Claims 1 to 13, wherein the wire (7) can be fixed with the bent-over end sections (8) in boreholes which are introduced into a furniture body (4), wherein the bent-over end sections (8) have a spacing from one another which corresponds to a spacing of rows of holes (6) in the furniture body (4).

15. An add-on kit for a domestic appliance or item of furniture, having a pullout guide according to one of Claims 1 to 14.

16. An item of furniture or domestic appliance, **characterized in that** the item of furniture or domestic appliance has a pullout guide according to one of Claims 1 to 14.

## Revendications

1. Guide d'extraction, en particulier pour un meuble ou un appareil ménager, avec un élément de guidage fixe et au moins un rail (20), dans lequel au moins une cage de roulement (30) avec plusieurs roulements (32) est disposée entre l'élément de guidage et le rail (20), dans lequel l'élément de guidage est formé par au moins un fil métallique (7, 11) présentant à au moins une extrémité une partie d'extrémité recourbée (8, 12), **caractérisé en ce que** le rail (20) présente des ouvertures (23) ou des calottes (24) embouties vers l'extérieur, dans lesquelles au moins certains des roulements (32) peuvent être enfoncés pour faire passer les parties d'extrémité recourbées (8, 12) du fil métallique (7, 11) ou le fil métallique (11) entre au moins deux roulements (32) qui se font face.

2. Guide d'extraction selon la revendication 1, dans lequel le fil métallique (7, 11) présente, au moins dans une section dans laquelle il est en contact avec les roulements (32), un profil constamment identique, en particulier avec une section ronde, elliptique, quadrangulaire, en particulier carrée ou en losange, ou ovale.

3. Guide d'extraction selon la revendication 1 ou 2, dans lequel le fil métallique (7, 11) est en porte-à-faux.

4. Guide d'extraction selon l'une des revendications 1 à 3, dans lequel le rail (20) présente un profil en forme de C avec une ouverture en forme de fente.

5. Guide d'extraction selon la revendication 4, dans lequel des parties d'extrémité recourbées (8, 12) du fil métallique (7, 11) passent à travers l'ouverture en forme de fente du rail (20), de façon à limiter une torsion du rail (20) autour du fil métallique (11).

6. Guide d'extraction selon l'une des revendications 1 à 5, dans lequel la cage de roulement (30) présente, pour au moins certains des roulements (32) déplacés dans des ouvertures (23) ou des calottes (24) embouties vers l'extérieur, des poches de roulement (31) dans lesquelles les roulements (32) sont retenus dans deux positions différentes.

7. Guide d'extraction selon la revendication 6, dans lequel la poche de roulement (31) présente un resserrement formé par une barrette (33), que le roulement (32) doit franchir pour passer dans l'autre des deux positions différentes.

8. Guide d'extraction selon l'une des revendications 1 à 7, dans lequel sont prévus dans la cage de roulement (30) des roulements supplémentaires (37), écartés des roulements (32) dans une partie antéro-supérieure et/ou dans une partie postéro-inférieure, en particulier des galets cylindriques, qui reposent par leur surface de roulement sur le fil métallique (7, 11) et qui peuvent déplacés vers l'extérieur à l'aide de l'au moins une partie d'extrémité recourbée (8, 12) du fil métallique (7, 11).

9. Guide d'extraction selon l'une des revendications 1 à 8, dans lequel est prévu un taquet pouvant être fixé sur le fil métallique, qui sert de butée pour la cage de roulement.

10. Guide d'extraction selon la revendication 9, dans lequel le taquet est conformé comme une butée d'angle (40) qui peut être fixée à la transition avec la partie d'extrémité recourbée (8, 12).

11. Guide d'extraction selon l'une des revendications 1 à 10, conformé en vue d'une extension totale ou d'une surextension et présentant un autre rail (50) supporté de façon à pouvoir se déplacer sur le rail (20) sur d'autres roulements (52).

12. Guide d'extraction selon l'une des revendications 1 à 11, dans lequel deux fils métalliques (7, 11) écartés et parallèles servent d'élément de guidage et dans lequel la cage de roulement (30) est construite en deux parties avec une cage de roulement extérieure (30a) et une cage de roulement intérieure (30i), la cage de roulement intérieure (30i) portant des roulements intérieurs (32i) qui passent entre les deux fils métalliques (7, 11) parallèles et écartés.

13. Guide d'extraction selon l'une des revendications 1 à 12, dans lequel le fil métallique (11) fait partie d'une grille latérale (10) d'un appareil de cuisson.

14. Guide d'extraction selon l'une des revendications 1 à 13, dans lequel le fil métallique (7) peut être fixé avec les parties d'extrémité recourbées (8) dans des trous percés dans un corps de meuble (4), les parties d'extrémité recourbées (8) étant de préférence écartées les unes des autres d'une distance correspondant à un écartement de rangées de trous (6) dans le corps de meuble (4).

15. Kit de modification d'un appareil ménager ou d'un meuble, comportant un guide d'extraction selon l'une des revendications 1 à 14.

16. Meuble ou appareil ménager, **caractérisé en ce que** le meuble ou l'appareil ménager comporte un guide d'extraction selon l'une des revendications 1 à 14.
